# EUROPÄISCHE PATENTSCHRIFT

(11) **EP 4 196 508 B1**
(45) Veröffentlichungstag und Bekanntmachung des Hinweises auf die Patenterteilung: **31.12.2025**
(21) Anmeldenummer: 21755509.3
(22) Anmeldetag: 17.08.2021
(51) Int. Cl.: C08F 216/06, C09B 67/02, E21C 41/26, C08J 5/18

(54) **FARBSTOFF ENTHALTENDES WASSERLÖSLICHES BEHÄLTNIS UND VERFAHREN ZUR HERSTELLUNG EINER GEFÄRBTEN, WÄSSRIGEN ALKALIMETALLCYANIDLÖSUNG**
WATER-SOLUBLE CONTAINER CONTAINING A DYE AND METHOD FOR PRODUCING A COLOURED AQUEOUS ALKALI METAL CYANIDE SOLUTION
RÉCIPIENT HYDROSOLUBLE CONTENANT DU COLORANT ET PROCÉDÉ DE FABRICATION D'UNE SOLUTION AQUEOUSE D'UN CYANURE DE MÉTAL ALKALIN COLORÉE

(30) Priorität: 17.08.2020 EP 20191314
(43) Veröffentlichungstag der Anmeldung: 21.06.2023
(73) Patentinhaber: CyPlus GmbH, 64295 Darmstadt (DE)
(72) Erfinder: SILL, Torsten, 50321 Brühl (DE); SCHMIDT, Bernd, 36396 Steinau (DE); MEGATIF, Lena, 50825 Köln (DE); SCHUMACHER, Bernd, 53332 Bornheim (DE); VILLELA FILHO, Murillo, 63843 Niedernberg (DE)
(74) Vertreter: Röhm Patent Association
(86) Internationale Anmeldenummer: PCT/EP2021/072800
(87) Internationale Veröffentlichungsnummer: WO 2022/038118

(56) Entgegenhaltungen:
- EP-A2- 0 457 715
- WO-A1-02/16205
- CH-B5- 579 667
- US-A- 6 124 036
- US-A1- 2016 083 490
- INTERNATIONAL CYANIDE MANAGEMENT INSTITUTE: "ICMI Seeks Comments on Proposed Requirement for the Use of Colorant Dyes in High Strength CyanideSolutions at Mining Operation", 9 August 2017 (2017-08-09), pages 1 - 2, XP055768706, Retrieved from the Internet <URL:https://www.cyanidecode.org/media-room/press-releases/2017/icmi-seeks-comments-proposed-requirement-use-colorant-dyes-high> [retrieved on 20210126]

## Beschreibung

Die Erfindung betrifft ein wasserlösliches Behältnis, das mit mindestens einem Farbstoff oder mindestens einer Farbstoffzusammensetzung befüllt ist. Das erfindungsgemäße wasserlösliche Behältnis kann in einem Verfahren zur Herstellung gefärbter, wässriger Alkalimetallcyanid-Lösungen eingesetzt werden. Die Erfindung betrifft auch ein Verfahren zur Herstellung einer Voranwendungszusammensetzung, umfassend mindestens ein erfindungsgemäßes, wasserlösliches Behältnis und mindestens eine wasserlösliche Alkalimetallcyanidverbindung, sowie die daraus durch Auflösen erhältliche, wässrige Anwendungszusammensetzung.

### Stand der Technik

Alkalimetallcyanidverbindungen, insbesondere Natriumcyanid, werden in der Minenindustrie als Laugungsmittel eingesetzt, insbesondere bei der Gold- und Silbergewinnung. Meist wird festes Alkalimetallcyanid in die Mine geliefert und vor Ort in der Mine in einer Lösestation in Wasser bzw. einem wässrigen Lösungsmittel gelöst, um eine wässrige Alkalimetallcyanidlösung als Laugungsmittel herzustellen. Die wässrige Alkalimetallcyanidlösung wird mit dem Erz in Kontakt gebracht, wobei das zugängliche Metall des Erzes durch Bildung eines entsprechenden Metall-Cyanidkomplexes gelöst wird. Je nach geographischer Lage der Mine kann das zur Lösung eingesetzte Wasser niedrige Temperaturen, oftmals ≤ 15 °C, einen großen Härtegrad oder eine hohe Salinität aufweisen.

Die eingesetzten Alkalimetallcyanidverbindungen sind für Mensch und Umwelt problematisch. Die Alkalimetallcyanidlösung ist farblos und mit bloßem Auge nicht von Wasser zu unterscheiden. So ist insbesondere bei Leckagen mit bloßem Auge nicht zu erkennen, ob es sich nur um Wasser oder eine Alkalimetallcyanidlösung handelt. Um Alkalimetallcyanidlösungen von Wasser unterscheidbar zu machen, können sie eingefärbt werden. Für stärkere Alkalimetallcyanidlösungen wird dies vom International Cyanide Management Institute gefordert.

Will man aus derselben Charge angelieferten festen Alkalimetallcyanids schwache und stärkere Alkalimetallcyanidlösungen herstellen und die schwachen Alkalimetallcyanidlösungen von den stärkeren Alkalimetallcyanidlösungen unterscheiden können, erfolgt das Einfärben an der Lösestation, wenn der Bedarf zum Einfärben tatsächlich besteht.

Alternativ könnte man zwei Chargen festen Alkalimetallcyanids vorhalten, eine ungefärbte für die schwachen Alkalimetallcyanidlösungen und eine eingefärbte für die stärkeren Alkalimetallcyanidlösungen. Dies wäre jedoch mit entsprechendem größerem Lagerbedarf und zusätzlicher Kapitalbindung verbunden.

Wasserlösliche Behältnisse auf Basis von Polyvinylalkoholen, die zur Aufnahme von Zugabestoffen geeignet sind, sind aus dem Stand der Technik bekannt und werden beispielsweise in US 6 124 036, WO 02/16205, EP 0 457 715 und CH 579 667 beschrieben. Die offenbarten wasserlöslichen Behältnisse eignen sich jedoch nicht für den Einsatz in wässrigen Lösungsmitteln, die oftmals in Minen vorliegen (wässrige Lösungsmittel mit niedriger Temperatur, großer Härte oder Salinität) und können das Auflösen der Behältnisse bei diesen Bedingungen nicht in ausreichend guter Zeit oder nur unvollständig ermöglichen.

US 6,124,036 offenbart einen Artikel umfassend (a) eine wässrige Zusammensetzung von 70 bis 95 Teilen eines Poly(oxyalkylen)-substituierten Chromogens und von 5 bis 30 Teilen Wasser; und (b) einen wasserlöslichen Film, der die Zusammensetzung enthält. Der wasserlösliche Film besteht vorzugsweise aus Poly(vinylalkohol).

Der vorliegenden Erfindung liegt die Aufgabe zugrunde, eine Möglichkeit zu schaffen, mit welcher an der Lösestation auf möglichst einfache Weise in einer guten Zeit ein in einem wasserlöslichen Behältnis befindlicher Farbstoff oder eine in einem wasserlöslichen Behältnis befindliche Farbstoffzusammensetzung dem Wasser bzw. dem wässrigen Lösungsmittel zugegeben werden kann. Insbesondere sollen auch bei den in einigen Minen vorherrschenden Bedingungen (niedrige Umgebungstemperatur und Wassertemperatur, Wasser mit hohem Gehalt an Salzen und Mineralien (insbesondere NaOH, NaCl, CaCO₃, Ca(OH)₂ und MgCO₃)) eine nahezu vollständige Auflösung in guter Zeit gewährleistet sein.

### Beschreibung

Die Aufgabe wird erfindungsgemäß gelöst mit einem wasserlöslichen Behältnis, das zum Aufnehmen eines Zugabestoffes oder einer Zugabestoffzusammensetzung geeignet ist und mit einem Zugabestoff oder einer Zugabestoffzusammensetzung, umfassend mindestens einen Farbstoff oder mindestens eine Farbstoffzusammensetzung, befüllt ist,
wobei das wasserlösliche Behältnis eine Wandstärke im Bereich von 5 bis 50 µm hat, und wobei das wasserlösliche Behältnis eine wasserlösliche Polymerzusammensetzung umfasst oder aus einer wasserlöslichen Polymerzusammensetzung besteht, wobei die Polymerzusammensetzung umfasst:
   a) mindestens ein Polyvinylalkohol-Copolymer P1 mit einem Hydrolysegrad im Bereich von 75 bis 95 Mol-%,
      wobei das Polyvinylalkohol-Copolymer P1 ein Copolymer ist, welches
         - Vinylalkohol-Wiederholungseinheiten,
         - Vinylester-Wiederholungseinheiten und
         - Wiederholungseinheiten mindestens eines Comonomers
      umfasst,
      wobei das mindestens eine Comonomer aus Pentaerythritolacrylat sowie optional Acrylsäure ausgewählt ist;
         oder
   b) mindestens ein Polyvinylalkohol-Copolymer P1 mit einem Hydrolysegrad im Bereich von 75 bis 95 Mol-%,
      wobei das Polyvinylalkohol-Copolymer P1 ein Copolymer ist, welches
         - Vinylalkohol-Wiederholungseinheiten,
         - Vinylester-Wiederholungseinheiten und
         - Wiederholungseinheiten mindestens eines Comonomers
      umfasst,
      wobei das mindestens eine Comonomer aus Pentaerythritolacrylat sowie optional Acrylsäure ausgewählt ist;
         und
      mindestens einen Polyvinylalkohol P2 mit einem Hydrolysegrad im Bereich von 87 bis 95 Mol-%;
wobei die Polymerzusammensetzung neben a) dem mindestens einen Polyvinylalkohol-Copolymer P1 oder b) dem mindestens einen Polyvinylalkohol-Copolymer P1 und dem mindestens einen Polyvinylalkohol P2 zusätzlich optional Zusatzstoffe enthalten kann;
wobei die Polymerzusammensetzung in dem Fall, dass sie mindestens ein Polyvinylalkohol-Copolymer P1 und kein Polyvinylalkohol P2 umfasst, einen Gehalt an Wiederholungseinheiten des mindestens einen Comonomers in einem Bereich von in Summe 10 bis 20 Gew.-%, bezogen auf das Gesamtgewicht von Polyvinylalkohol-Copolymer P1, aufweist; und
wobei die Polymerzusammensetzung in dem Fall, dass sie mindestens ein Polyvinylalkohol-Copolymer P1 und mindestens einen Polyvinylalkohol P2 umfasst, einen Gehalt an Wiederholungseinheiten des mindestens einen Comonomers in einem Bereich von in Summe 10 bis 20 Gew.-%, bezogen auf das Gesamtgewicht von Polyvinylalkohol-Copolymer P1 und Polyvinylalkohol P2, aufweist.

In einer Ausführungsform betrifft die Erfindung ein wasserlösliches Behältnis, das zum Aufnehmen eines Zugabestoffes oder einer Zugabestoffzusammensetzung geeignet ist und mit einem Zugabestoff oder einer Zugabestoffzusammensetzung, umfassend mindestens einen Farbstoff oder mindestens eine Farbstoffzusammensetzung, befüllt ist,
wobei das wasserlösliche Behältnis eine Wandstärke im Bereich von 5 bis 50 µm hat, und
wobei das wasserlösliche Behältnis aus einer Polymerzusammensetzung besteht, wobei die Polymerzusammensetzung mindestens ein Polyvinylalkohol-Copolymer P1 umfasst, wobei der Comonomergehalt in einem Bereich von in Summe 10 bis 20 Gew.-%, bezogen auf das Gesamtgewicht von Polyvinylalkohol-Copolymer P1, liegt. In dieser Ausführungsform umfasst die Polymerzusammensetzung keinen Polyvinylalkohol P2 gemäß dieser Erfindung.

In einer weiteren Ausführungsform betrifft die Erfindung ein wasserlösliches Behältnis, das zum Aufnehmen eines Zugabestoffes oder einer Zugabestoffzusammensetzung geeignet ist und mit einem Zugabestoff oder einer Zugabestoffzusammensetzung, umfassend mindestens einen Farbstoff oder mindestens eine Farbstoffzusammensetzung, befüllt ist,
wobei das wasserlösliche Behältnis eine Wandstärke im Bereich von 5 bis 50 µm hat, und wobei das wasserlösliche Behältnis eine wasserlösliche Polymerzusammensetzung umfasst oder aus einer wasserlöslichen Polymerzusammensetzung besteht, wobei die Polymerzusammensetzung mindestens ein Polyvinylalkohol-Copolymer P1 und mindestens einen Polyvinylalkohol P2 umfasst, wobei der Comonomergehalt in einem Bereich von in Summe 10 bis 20 Gew.-%, bezogen auf das Gesamtgewicht von Polyvinylalkohol-Copolymer P1 und Polyvinylalkohol P2, liegt. In dieser Ausführungsform umfasst die Polymerzusammensetzung ein Gemisch von mindesten einem Polyvinylalkohol-Copolymer P1 und mindestens einem Polyvinylalkohol P2 gemäß dieser Erfindung.

Das Behältnis mit dem Zugabestoff bzw. der Zugabestoffzusammensetzung kann in der Lösestation mit in das Wasser bzw. das wässrige Lösungsmittel gegeben werden. Es löst sich auf und setzt dadurch den Zugabestoff bzw. die Zugabestoffzusammensetzung mit dem Farbstoff bzw. der Farbstoffzusammensetzung frei.

So ist es möglich, aus derselben Charge festen Alkalimetallcyanids ungefärbte Alkalimetallcyanidlösungen (d. h. das Behältnis mit dem Zugabestoff bzw. der Zugabestoffzusammensetzung wird nicht mit in das Wasser bzw. das wässrige Lösungsmittel gegeben) als auch gefärbte Alkalimetallcyanidlösungen (d. h. das Behältnis mit dem Zugabestoff bzw. der Zugabestoffzusammensetzung wird mit in das Wasser bzw. das wässrige Lösungsmittel gegeben) herzustellen.

Alternativ ist es auch möglich, festes Alkalimetallcyanid mit einem beigegebenen, erfindungsgemäßen Behältnis mit dem Zugabestoff bzw. der Zugabestoffzusammensetzung zu liefern, z. B. in einem gemeinsamen Gebinde. Mit einer solchen gelieferten Kombination aus festem Alkalimetallcyanid einerseits und Behältnis mit dem Zugabestoff bzw. der Zugabestoffzusammensetzung andererseits ist es in der Mine nicht erforderlich, die etablierten Abläufe an bzw. in der Lösestation zu ändern. Die genannte Kombination kann einfach mit dem Wasser bzw. dem wässrigen Lösungsmittel zusammengebracht werden, wodurch der Zugabestoff bzw. der Zugabestoffzusammensetzung freigesetzt wird.

Es wurde gefunden, dass das erfindungsgemäße Polyvinylalkohol-Copolymer P1 bei dem Hydrolysegrad im Bereich von 75 bis 95 Mol-% eine besonders gute Wasserlöslichkeit aufweist, und zwar auch, wenn das flüssige wässrige Lösungsmittel eine Temperatur von etwa ≤ 15°C, insbesondere etwa 1 bis 10 °C, hat und/oder das flüssige wässrige Lösungsmittel einem pH-Wert im Bereich von 6 bis 14 hat. Das bedeutet, dass auch bei Minen mit Wasser bzw. wässrigem Lösungsmittel mit tiefen Temperaturen (≤ 15°C, insbesondere etwa 1 bis 10 °C) bzw. einem pH-Wert im Bereich von 6 bis 14 sich das Material des erfindungsgemäßen Behältnisses mit einer guten Geschwindigkeit auflöst. Auch in flüssigen wässrigen Lösungsmitteln mit einem vergleichsweise hohen Gehalt an Salzen und/oder Mineralien (insbesondere NaCl, CaCO₃ und MgCO₃), wie beispielsweise Meerwasser, wird mit dem erfindungsgemäßen Behältnis eine gute Wasserlöslichkeit erzielt.

Ebenso weist der erfindungsgemäße Polyvinylalkohol P2 mit einem Hydrolysegrad im Bereich von 87 bis 95 Mol-% eine besonders gute Wasserlöslichkeit auf, und zwar auch, wenn das flüssige wässrige Lösungsmittel eine Temperatur von etwa ≤ 15 °C, insbesondere etwa 1 bis 10 °C, hat und/oder das flüssige wässrige Lösungsmittel einem pH-Wert im Bereich von 6 bis 14 hat.

Ebenso weist das Gemisch von Polyvinylalkohol-Copolymer P1 und Polyvinylalkohol P2, sofern der Comonomergehalt in einem Bereich von in Summe 10 bis 20 Gew.-%, bezogen auf das Gesamtgewicht von Polyvinylalkohol-Copolymer P1 und Polyvinylalkohol P2, liegt, eine besonders gute Wasserlöslichkeit auf, und zwar auch, wenn das flüssige wässrige Lösungsmittel eine Temperatur von etwa ≤ 15 °C, insbesondere etwa 1 bis 10 °C, hat und/oder das flüssige wässrige Lösungsmittel einem pH-Wert im Bereich von 6 bis 14 hat.

Insbesondere erfindungsgemäße wasserlösliche Behältnisse, die das Polyvinylalkohol-Copolymer P1 umfassen, zeichnen sich dadurch aus, dass in diesen Alterungsprozesse, welche sich negativ auf die Löslichkeit und die mechanischen Eigenschaften (wie Verformbarkeit, Flexibilität, Sprödigkeit) des Behältnisses in wässrigen Lösungsmitteln auswirken, unterdrückt sind oder nur mit geringer Geschwindigkeit ablaufen. Ohne an diese Theorie gebunden zu sein, wird angenommen, dass bei diesen Alterungsprozessen die Kristallisation des Polymers während der Lagerung, chemische Reaktionen mit umgebenden Medien, insbesondere Cyanidverbindungen, während der Lagerung und der Wassergehalt der Polymerzusammensetzung eine Rolle spielen.

Der Gesamtgehalt an Wiederholungseinheiten des mindestens einen Comonomers, ausgewählt aus Pentaerythritolacrylat sowie optional Acrylsäure liegt erfindungsgemäß in einem Bereich von in Summe 10 bis 20 Gew.-%, bezogen auf das Gesamtgewicht von Polyvinylalkohol-Copolymer P1 und gegebenenfalls Polyvinylalkohol P2. Sofern kein Polyvinylalkohol P2 enthalten ist, bezieht sich der Comonomergehalt auf das Gewicht des Polyvinylalkohol-Copolymers P1 allein. Es wurde beobachtet, dass ein Comonomergehalt von mindestens 10 Gew.-% erforderlich ist, um eine ausreichende Inhomogenität in den Polymerketten der Polymerzusammensetzung zu erreichen, um so die Kristallisation der Polymere zu unterdrücken und die Löslichkeit auch nach längerer Lagerung zu gewährleisten. Auch nach Lagerung in chemisch aggressiver Umgebung (z. B. in Gegenwart der von Cyanidverbindungen) konnte für Polyvinylalkohol-Copolymere P1 mit einem Comonomergehalt von in Summe 10 bis 20 Gew.-% ein gutes Lösungsverhalten beobachtet werden. Ein Comonomergehalt von mehr als 20 Gew.-% hat wiederum einen negativen Einfluss auf das Lösungsverhalten der Polymerzusammensetzung und ist daher von Nachteil.

Mit der Wandstärke des Behältnisses im Bereich von 5 bis 50 µm haben die Wandungen des Behältnisses ein gutes Verhältnis von Oberfläche zu Volumen. Das bedeutet, dass die Materialdicke, durch welche sich das flüssige Wasser bzw. das flüssige wässrige Lösungsmittel "hindurcharbeiten" muss, relativ gering ist. Auch dies trägt dazu bei, dass sich das Behältnis mit einer guten Geschwindigkeit auflöst. Zudem weisen Behältnisse mit einer Wandstärke im Bereich von 5 bis 50 µm eine ausreichend gute mechanische Stabilität auf.

Das Polyvinylalkohol-Copolymer P1 hat ebenso wie der Polyvinylalkohol P2 thermoplastische Eigenschaften. Insoweit lässt sich aus der Polymerzusammensetzung hergestelltes Material thermoplastisch verformen und durch Schmelzschweißen verbinden. Dementsprechend können Wandungen des Behältnisses durch Schmelzschweißen miteinander verbunden werden.

Ein "Behältnis" im Sinne dieser Erfindung ist ein zur Aufnahme von Stoffen dienendes und sie wenigstens teilweise umschließendes Raumgebilde. Es kann beispielsweise als formstabiler Behälter oder als Beutel ausgeführt sein. Besonders bevorzugt sind Folienbeutel. Folienbeutel können beispielsweise durch Verschweißen zweier Folienlagen, durch Falten einer Folie und Verschweißen der offenen Seiten oder vorzugsweise aus Folienschläuchen durch Verschweißen beider Enden erhalten werden.

"Wasserlöslich" bzw. "Iöslich" bedeutete im Rahmen dieser Erfindung bezogen auf das Behältnis, dass sich das Behältnis in einer ausreichenden Menge eines wässrigen Lösungsmittels zu mindesten 50 Gew.-%, vorzugsweise mindestens 75 Gew.-%, insbesondere mindestens 95 Gew.-%, bezogen auf das Gesamtgewicht des wasserlöslichen Behältnisses, auflöst. Etwaige nicht-wasserlösliche Bestandteile der Polymerzusammensetzung werden dementsprechend durch das Auflösen der wasserlöslichen Bestandteile "freigesetzt".

Die Geschwindigkeit der Auflösung des wasserlöslichen Behältnisses kann dabei beispielsweise ermittelt werden, indem das wasserlösliche Behältnis, welches eine vorbestimmte Menge mindestens eines wasserlöslichen Farbstoffs oder mindestens einer wasserlöslichen Farbstoffzusammensetzung enthält, bei einer vorbestimmten Temperatur, insbesondere einer durch die geplante Anwendung vorgegebenen Temperatur (beispielsweise einer Temperatur ≤ 15 °C), unter Rühren in einem wässrigen Lösungsmittel gelöst wird, und die Zeit bis zum Erreichen der maximalen Farbstoffkonzentration in der Lösung ermittelt wird. Zur Ermittlung des Erreichens der maximalen Farbstoffkonzentration kann beispielsweise in regelmäßigen Abständen die Extinktion der Lösung, beispielsweise mittels UV/Vis-Spektroskopie oder Photometrie, bestimmt werden. Ein Verfahren zur Bestimmung der Geschwindigkeit der Auflösung des wasserlöslichen Behältnisses ist in den Beispielen beschrieben. Der Fachmann kann das dort beschriebene Verfahren an die jeweiligen Erfordernisse anpassen.

Die Vollständigkeit der Auflösung des wasserlöslichen Behältnisses kann beispielsweise optisch ermittelt werden. Große Polymerrückstände sind bei unvollständiger Auflösung (ggf. nach Filtration) visuell erkennbar. Kleinere Polymerrückstände können aufgrund des Tyndall-Effekts mittels geeigneter optischer Methoden, beispielsweise mittels Nephelometrie, nachgewiesen werden. Geeignete Verfahren sind dem Fachmann geläufig.

Besonders bevorzugt wird eine Polymerzusammensetzung eingesetzt, welche sich rückstandsfrei auflöst, d. h. das wasserlösliche Behältnis löst sich zu 100 Gew.-% in dem wässrigen Lösungsmittel auf. So werden Rückstände der Polymerzusammensetzung vermieden, welche bei der Anwendung in einer Mine zur Verstopfung von Filteranlagen und/oder Pumpen führen können.

Ein "wässriges Lösungsmittel" im Sinne dieser Erfindung ist ein Lösungsmittel, das zu mindestens 50 Gew.-%, insbesondere mindestens 60 Gew.-%, bezogen auf das Gesamtgewicht des Lösungsmittels, aus Wasser besteht. Darüber hinaus kann das wässrige Lösungsmittel gelöste Zusatzstoffe, insbesondere basische Zusatzstoffe (beispielsweise Hydroxidsalze wie NaOH und KOH), Salze (wie NaCl, CaCO₃, Ca(OH)₂, MgCO₃) sowie mindestens eine Cyanidverbindung umfassen. Geeignete Cyanidverbindungen sind insbesondere Alkalimetallcyanidverbindungen, beispielsweise Natriumcyanid (NaCN) und Kaliumcyanid (KCN).

Das verwendete Wasser kann prinzipiell jeden Ursprungs sein. Es kann Trinkwasser, demineralisiertes Wasser, Grundwasser, Flusswasser, Meerwasser, aufgearbeitetes Wasser, beispielsweise Prozesswasser, insbesondere aus der Minenindustrie (z. B. eine aufgearbeitete Laugungsmittellösung), sein. Die Zusammensetzung des Lösungsmittels bezieht sich dabei auf die Lösungsmittel und die darin gelösten Stoffe. Feststoffe, wie beispielsweise Sedimente aus Flusswasser, werden nicht berücksichtigt.

Allgemein werden Polyvinylalkohole großtechnisch hergestellt, indem zunächst ein Polyvinylester mittels geeigneter Polymerisationsverfahren hergestellt wird. Der erhaltene Polyvinylester wird anschließend in einer polymeranalogen Hydrolysereaktion zu Polyvinylalkohol umgesetzt, wobei der Anteil der im Polymer zurückbleibenden Vinylester-Wiederholungseinheiten je nach Reaktionsbedingungen variieren kann. Der Anteil an Vinylalkohol-Wiederholungseinheiten im Polymer wird üblicherweise in Mol-% angegeben und wird als Hydrolysegrad des Polyvinylalkohols bezeichnet.

Die erfindungsgemäßen Polyvinylalkohol-Copolymere P1 bzw. die erfindungsgemäßen Polyvinylalkohole P2 können somit nicht durch die direkte Copolymerisation der sie ausmachenden Monomere erhalten werden, sondern werden durch eine Polymerisation mit anschließender Hydrolyse des erhaltenen Polymers erhalten.

Die Zusammensetzung des Polyvinylalkohol-Copolymers P1 bzw. des Polyvinylalkohols P2 kann mittels bekannter Analyseverfahren ermittelt werden. Besonders geeignet sind IR- und NMR-Spektroskopie.

NMR-Analytik des Polyvinylalkohol-Copolymers P1 bzw. des Polyvinylalkohols P2 wird beispielsweise mittels ¹H-NMR und ¹³C-NMR in Lösung (mit einem geeigneten Lösungsmittel wie deuteriertem Dimethylsulfoxid, DMSO-D6) oder im Festkörper durchgeführt.

IR-Analytik des Polyvinylalkohol-Copolymers P1 bzw. des Polyvinylalkohols P2 wird beispielsweise mittels ATR-Infrarotspektroskopie (ATR = attenuated total reflection) an Polymerfilmen durchgeführt.

Der Hydrolysegrad des Polyvinylalkohol-Copolymers P1 bzw. des Polyvinylalkohols P2 kann mittels quantitativer ¹H-NMR-Spektroskopie bestimmt werden. Um einen Protonenaustausch des Polyvinylalkohols zu vermeiden, wird dazu ein ¹H-NMR-Festkörper-Spektrum mit einem geeignet internen Standard aufgenommen. Durch eine quantitative Auswertung der Flächen der einzelnen Signale im ¹H-NMR-Spektrum, welche den Protonen im Polymer zugeordnet werden können, ist die quantitative Bestimmung des Hydrolysegrades möglich.

Die Polymerzusammensetzung enthält a) mindestens ein Polyvinylalkohol-Copolymer P1 mit einem Hydrolysegrad im Bereich von 75 bis 95 Mol-% oder b) mindestens ein Polyvinylalkohol-Copolymer P1 mit einem Hydrolysegrad im Bereich von 75 bis 95 Mol-% und mindestens einen Polyvinylalkohol P2 mit einem Hydrolysegrad im Bereich von 87 bis 95 Mol-%.

Die erfindungsgemäßen Polyvinylalkohol-Copolymere P1 können durch Hydrolyse aus Poly(vinylester-co-pentaerythritolacrylat) erhalten werden, insbesondere durch Hydrolyse von Poly(vinylacetat-co-pentaerythritolacrylat). Wird die Hydrolyse eines Poly(vinylester-co-pentaerythritolacrylats) vor der Umsetzung sämtlicher Vinylacetat-Wiederholungseinheiten beendet, so ist das Poly(vinylalkohol-co-vinylester-co-pentaerythritolacrylat) erhältlich. Die vollständige Hydrolyse der Vinylester-Wiederholungseinheiten von Poly(vinyester-co-pentaerythritolacrylat) ermöglicht die Herstellung von Poly(vinylalkohol-co-pentaerythritolacrylat). Durch geeignete Reaktionsbedingungen können Poly(vinylalkohol-co-vinyester-co-pentaerythritolacrylat) und Poly(vinylalkohol-co-vinylester-co-pentaerythritolacrylat-co-acrylsäure) gezielt erhalten werden.

Bevorzugte Polyvinylalkohol-Copolymere P1 im Sinne dieser Erfindung sind Polymerverbindungen, die Wiederholungseinheiten insbesondere der folgenden Strukturen (I), (II) und (III) umfassen oder aus diesen bestehen: 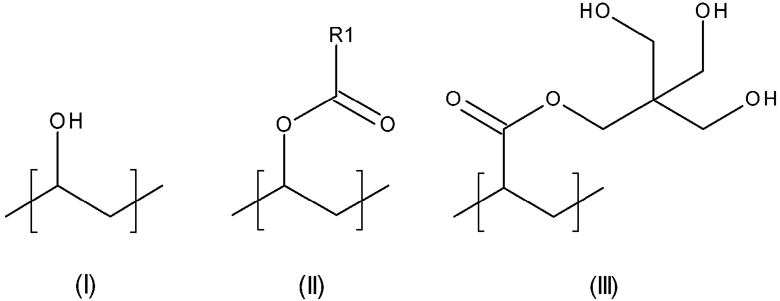 wobei R1 ein linearer oder verzweigter Alkylrest mit 1 bis 8 Kohlenstoffatomen, vorzugsweise ein linearer Alkylrest mit 1 bis 5 Kohlenstoffatomen, und besonders bevorzugt ein Methylrest oder ein Ethylrest ist.

Optional können erfindungsgemäße Polyvinylalkohol-Copolymere P1 darüber hinaus Wiederholungseinheiten der folgenden Struktur (IV) umfassen:

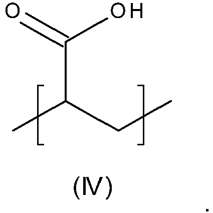

Vinylalkohol-Wiederholungseinheiten der Struktur (I) werden dabei üblicherweise durch Hydrolyse von Vinylester-Wiederholungseinheiten der Struktur (II) erhalten. Acrylsäure-Wiederholungseinheiten der Struktur (IV) werden dabei üblicherweise durch Hydrolyse von Pentaerythritolacrylat-Wiederholungseinheiten der Struktur (III) erhalten.

Wiederholungseinheiten der Struktur (I) werden hierin auch als Vinylalkohol-Wiederholungseinheiten bezeichnet. Wiederholungseinheiten der Struktur (II) werden hierin auch als Vinylester-Wiederholungseinheiten bezeichnet. Wiederholungseinheiten der Struktur (III) werden hierin auch als Pentaerythritolacrylat-Wiederholungseinheiten bezeichnet. Wiederholungseinheiten der Struktur (IV) werden hierin auch als Acrylsäure-Wiederholungseinheiten bezeichnet.

In einer weiter bevorzugten Ausführungsform umfasst das erfindungsgemäße Polyvinylalkohol-Copolymer P1 Wiederholungseinheiten der folgenden Strukturen (I), (II.1), (III) und optional (IV) oder besteht aus diesen:

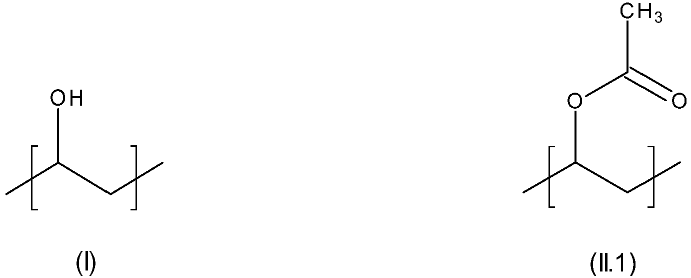

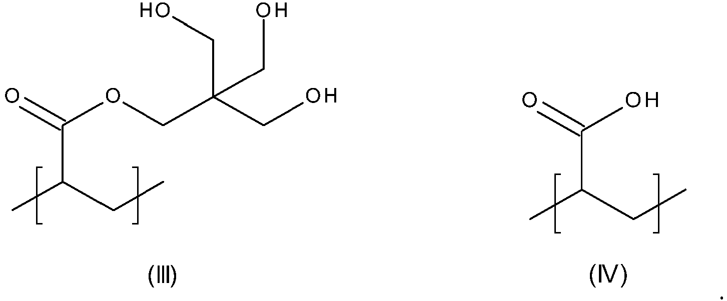

Wiederholungseinheiten der Struktur (II.1) werden hierin auch als Vinylacetat-Wiederholungseinheiten bezeichnet.

Die erfindungsgemäßen Polyvinylalkohol-Copolymere P1 werden durch die Copolymerisation von Monomeren mit hydrolysierbaren funktionellen Gruppen (insbesondere Vinylestern) und Pentaerythritolacrylat gefolgt von einer polymeranalogen Hydrolyse wenigstens eines Teils der hydrolysierbaren funktionellen Gruppen des erhaltenen Polymers hergestellt. Der hierin angegebene Hydrolysegrad eines Polyvinylalkohol-Copolymers P1 gibt dabei den molaren Anteil an Vinylalkohol-Wiederholungseinheiten der Struktur (I), bezogen auf die Summe der Vinylalkohol-Wiederholungseinheiten der Struktur (I) und der Wiederholungseinheiten, die aus der Polymerisation der Monomeren mit hydrolysierbaren funktionellen Gruppen erhalten werden (insbesondere Wiederholungseinheiten der Struktur (II) bzw. (II.1)), an. Weitere Comonomere, insbesondere Wiederholungseinheiten der Strukturen (III) und (VI), werden bei der Bestimmung des Hydrolysegrades des Polyvinylalkohol-Copolymers P1 im Sinne der Erfindung nicht berücksichtigt. Dennoch können auch die weiteren Comonomere, insbesondere Wiederholungseinheiten der Struktur (III), Hydrolysereaktionen eingehen. Durch Hydrolyse der Wiederholungseinheiten der Struktur (III) werden so insbesondere Wiederholungseinheiten der Struktur (IV) in einer polymeranalogen Hydrolysereaktion erhalten.

Erfindungsgemäße Polyvinylalkohol-Copolymere P1 weisen einen Hydrolysegrad im Bereich von 75 bis 95 Mol-%, vorzugsweise 80 bis 90 Mol-%, stärker bevorzugt 85 bis 90 Mol-%, auf. Das bedeutet, dass die Polyvinylalkohol-Anteile dieser Polyvinylalkohol-Copolymere P1 zu 75 bis 95 Mol-% aus Wiederholungseinheiten der Struktur (I) und zu 5 bis 25 Mol-% aus Wiederholungseinheiten der Struktur (II) aufgebaut sind, wobei sich die Prozentangaben auf die Summe der Wiederholungseinheiten der Struktur (I) und der Wiederholungseinheiten der Struktur (II) beziehen. Zusätzlich umfassen die Polyvinylalkohol-Copolymere P1 Wiederholungseinheiten der Struktur (III) und optional Wiederholungseinheiten der Struktur (IV), welche nicht zum Hydrolysegrad beitragen bzw. bei der Berechnung des Hydrolysegrades nicht berücksichtigt werden.

In einer bevorzugten Ausführungsform der Erfindung umfasst die Polymerzusammensetzung mindestens ein Polyvinylalkohol-Copolymer P1, mit mindestens einer Vinylalkohol-Wiederholungseinheit, mindestens einer Vinylacetat-Wiederholungseinheit und mindestens einer Pentaerythritolacrylat-Wiederholungseinheit. In einer Ausführungsform umfasst das Polyvinylalkohol-Copolymer P1 zudem Acrylsäure-Wiederholungseinheiten. Das Polyvinylalkohol-Copolymer P1 kann somit vorzugsweise aus einem Poly(vinylalkohol-co-vinylacetat-co-pentaerythritolacrylat), einem Poly(vinylalkohol-co-vinylacetat-co-pentaerythritolacrylat-co-acrylsäure) oder einem Gemisch der Vorgenannten ausgewählt sein. Vorzugsweise ist das Polyvinylalkohol-Copolymer P1 ein Poly(vinylalkohol-co-vinylacetat-co-pentaerythritolacrylat), ein Poly(vinylalkohol-co-vinylacetat-co-pentaerythritolacrylat-co-acrylsäure) oder ein Gemisch der Vorgenannten.

In einer Ausführungsform ist das Polyvinylalkohol-Copolymer P1 ein Polyvinylalkohol-Copolymer P1.1, welches 10 bis 20 Gew.-% Wiederholungseinheiten, die von Pentaerythritolacrylat abgeleitet sind (Wiederholungseinheiten der Formel (III)), und optional von Acrylsäure abgeleitet sind (Wiederholungseinheiten der Formel (IV)), umfasst, bezogen auf das Gesamtgewicht von Polyvinylalkohol-Copolymer P1. Stärker bevorzugt umfasst das Polyvinylalkohol-Copolymer P1.1 Wiederholungseinheiten, die von Pentaerythritolacrylat abgeleitet sind (Wiederholungseinheiten der Formel (III)), und optional von Acrylsäure abgeleitet sind (Wiederholungseinheiten der Formel (IV)), in einem Bereich von 10,5 bis 17,5 Gew.-%, insbesondere 11 bis 15 Gew.-%, bezogen auf das Gesamtgewicht von Polyvinylalkohol-Copolymer P1.1. Der Anteil an Wiederholungseinheiten, die von Vinylalkohol abgeleitet sind (Wiederholungseinheiten der Formel (I)) und von Vinylester abgeleitet sind (Wiederholungseinheiten der Formel (II)), liegt in dem Polyvinylalkohol P1.1 dementsprechend bei 80 bis 90 Gew.-%, bezogen auf das Gesamtgewicht des Polyvinylalkohol-Copolymers P1.1, vorzugsweise bei 82,5 bis 89,5 Gew.-%, stärker bevorzugt bei 85 bis 89 Gew.-%.

Vorzugsweise liegt das Verhältnis von Pentaerythritolacrylat-Wiederholungseinheiten (Wiederholungseinheiten der Formel (III)) zu Acrylsäure-Wiederholungseinheiten (Wiederholungseinheiten der Formel (IV)) in dem Polyvinylalkohol-Copolymer P1 in einem Bereich von 1:1 bis 1:0.

Der Polyvinylalkohol-Anteil in dem Polyvinylalkohol-Copolymer P1 besteht, wie bereits beschrieben wurde, aus Vinylalkohol-Wiederholungseinheiten und Vinylester-Wiederholungseinheiten (vorzugsweise Vinylacetat-Wiederholungseinheiten). Der Anteil an Vinylester-Wiederholungseinheiten liegt dabei in einem Bereich von 5 bis 25 Mol-%, bezogen auf die Gesamtmenge an Polyvinylalkohol-Wiederholungseinheiten und Vinylester-Wiederholungseinheiten in dem Polyvinylalkohol-Copolymer P1, bevorzugt in einem Bereich von 10 bis 20 Mol-%, und besonders bevorzugt in einem Bereich von 10 bis 15 Mol-%. In diesem Fall umfasst der in dem Polyvinylalkohol-Copolymer P1 enthaltene Polyvinylalkohol-Anteil somit Vinylalkohol-Wiederholungseinheiten im Bereich von 75 bis 95 Mol-%, bevorzugt im Bereich von 80 bis 90 Mol-%, besonders bevorzugt im Bereich von 85 bis 90 Mol-%, bezogen auf die Gesamtmenge an Polyvinylalkohol-Wiederholungseinheiten und Vinylester-Wiederholungseinheiten in dem Polyvinylalkohol-Copolymer P1. Dies entspricht einem Hydrolysegrad des Polyvinylalkohol-Anteils von 75 bis 95 Mol-%, bevorzugt 80 bis 90 Mol-%, besonders bevorzugt 85 bis 90 Mol-%.

Anders ausgedrückt umfasst das Polyvinylalkohol-Copolymer P1 in einer bevorzugten Ausführungsform:
a) 80 bis 90 Gew.-%, vorzugsweise 82,5 bis 89,5 Gew.-%, besonders bevorzugt 85 bis 89 Gew.-%, bezogen auf das Gesamtgewicht von Polyvinylalkohol-Copolymer P1, an Wiederholungseinheiten der Formeln (I) und (II.1), und
b) 10 bis 20 Gew.-%, vorzugsweise 10,5 bis 17,5 Gew.-%, insbesondere 11 bis 15 Gew.-%, bezogen auf das Gesamtgewicht von Polyvinylalkohol-Copolymer P1, an Wiederholungseinheiten der Formeln (III) und (IV),

wobei die Wiederholungseinheiten der Formel (I) 75 bis 95 Mol-%, vorzugsweise 80 bis 90 Mol-%, insbesondere 85 bis 90 Mol-% der Wiederholungseinheiten der Formeln (I) und (II.1) ausmachen, bezogen auf die Summe der Wiederholungseinheiten der Formeln (I) und (II.1), und
wobei Wiederholungseinheiten der Formel (III) 50 bis 100 Mol-%, vorzugsweise 60 bis 100 Mol-%, der Wiederholungseinheiten der Formeln (III) und (IV) ausmachen, bezogen auf die Summe der Wiederholungseinheiten der Formeln (III) und (IV).

Die erfindungsgemäßen Polyvinylalkohol-Copolymere P1 weisen eine gute Löslichkeit in wässrigen Lösungsmitteln auf, insbesondere auch bei niedrigen Temperaturen oberhalb von 0 °C oder bei 0 °C sowie über einen weiten pH-Wertebereich. Die Löslichkeit ist auch in wässrigen Lösungsmitteln mit vergleichsweise hohem Gehalt an Salzen und /oder Mineralien gut. Ohne an die Theorie gebunden zu sein, wird angenommen, dass die sterisch anspruchsvollen Pentaerythritolacrylat-Wiederholungseinheiten einen Einfluss auf den Kristallisationsgrad der Polyvinylalkohol- und Polyvinylester-Wiederholungseinheiten haben und dadurch die Löslichkeit des Polymers in wässrigen Lösungsmitteln positiv beeinflussen. Der Einfluss des Kristallisationsgrads auf die Löslichkeit von Polyvinylalkoholen wird beispielsweise von M. L. Hallensleben im Kapitel "Polyvinyl Compounds, others" in Ullmann's Encyclopedia of Industrial Chemistry, 2012, Vol. 29, Wiley-VCH Verlag GmbH & Co. KGaA, Weinheim, Germany, Seite 606, linke Spalte, dritter Absatz, beschrieben.

Bevorzugte Polvinylalkohole P2 im Sinne dieser Erfindung sind Polymerverbindungen, die Wiederholungseinheiten der folgenden Strukturen (I) und (II) umfassen: 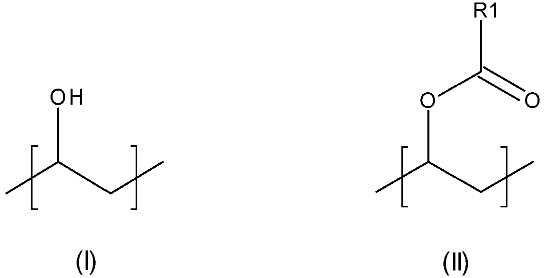 wobei R1 ein linearer oder verzweigter Alkylrest mit 1 bis 8 Kohlenstoffatomen, vorzugsweise ein linearer Alkylrest mit 1 bis 5 Kohlenstoffatomen, und besonders bevorzugt ein Methylrest oder ein Ethylrest ist.

In einer bevorzugten Ausführungsform umfasst der erfindungsgemäße Polvinylalkohol P2 Wiederholungseinheiten der folgenden Strukturen (I) und (II.1) oder besteht aus diesen:

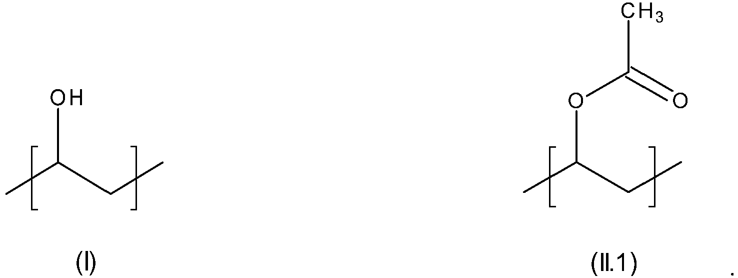

Die erfindungsgemäßen Polyvinylalkohole P2 können durch die Polymerisation von Monomeren mit hydrolysierbaren funktionellen Gruppen (insbesondere Vinylester) gefolgt von einer polymeranalogen Hydrolyse wenigstens eines Teils der hydrolysierbaren funktionellen Gruppen des erhaltenen Polymers hergestellt werden. Der Hydrolysegrad eines Polyvinylalkohols P2 gibt daher den molaren Anteil an Vinylalkohol-Wiederholungseinheiten der Struktur (I) bezogen auf die die Summe der Vinylalkohol-Wiederholungseinheiten der Struktur (I) und der Wiederholungseinheiten, die aus der Polymerisation der Monomeren mit hydrolysierbaren funktionellen Gruppen erhalten werden und als solche nach der Hydrolysereaktion im Polyvinylalkohols P2 verbleiben (Wiederholungseinheiten der Struktur (II)), an.

Erfindungsgemäße Polyvinylalkohole P2 weisen einen Hydrolysegrad im Bereich von 87 bis 95 Mol-% auf. Das bedeutet, dass diese Polyvinylalkohole P2 zu 87 bis 95 Mol-% aus Wiederholungseinheiten der Struktur (I) und zu 5 bis 13 Mol-% aus Wiederholungseinheiten der Struktur (II) aufgebaut sind, wobei sich die Prozentangaben auf die Summe der Wiederholungseinheiten der Struktur (I) und der Wiederholungseinheiten der Struktur (II) beziehen.

In einer Ausführungsform der Erfindung umfasst die erfindungsgemäße wasserlösliche Polymerzusammensetzung mindestens einen Polyvinylalkohol P2, wobei der Polyvinylalkohol P2 mindestens eine Vinylalkohol-Wiederholungseinheit und mindestens eine Vinylester-Wiederholungseinheit umfasst. Die mindestens eine Vinylester-Wiederholungseinheit ist vorzugsweise eine Vinylacetat-Wiederholungseinheit (d.h. Ethenylacetat-Wiederholungseinheit, Wiederholungseinheit der Struktur (II.1)). Der Anteil an Vinylester-Wiederholungseinheiten im erfindungsgemäßen Polyvinylalkohol P2 liegt in einem Bereich von 5 bis 13 Mol-%, bezogen auf die Zusammensetzung des Polyvinylalkohols P2. Der Anteil an Vinylalkohol-Wiederholungseinheiten im erfindungsgemäßen Polyvinylalkohol P2 liegt korrespondierend in einem Bereich von 87 bis 95 Mol-%, bezogen auf die Zusammensetzung des Polyvinylalkohols P2. Vorzugsweise liegt der Anteil an Vinylalkohol-Wiederholungseinheiten in einem Bereich von 91 bis 94 Mol-%, besonders bevorzugt in einem Bereich von 92 bis 93 Mol-%. Dementsprechend liegt der Hydrolysegrad des Polyvinylalkohols P2 in einem Bereich von 87 bis 95 Mol-%, bezogen auf die Zusammensetzung des Polyvinylalkohols P2, vorzugsweise in einem Bereich von 91 bis 94 Mol-%, besonders bevorzugt in einem Bereich von 92 bis 93 Mol-%. In diesem Fall hat also der in der wasserlöslichen Polymerzusammensetzung enthaltene Polyvinylalkohol P2 Vinylalkohol-Wiederholungseinheiten im Bereich von 87 bis 95 Mol-%, bevorzugt im Bereich von 91 bis 94 Mol-%, besonders bevorzugt im Bereich von 92 bis 93 Mol-%, und Vinylacetat-Wiederholungseinheiten im jeweils korrespondierenden Bereich, also im Bereich von 5 bis 13 Mol-%, bevorzugt im Bereich von 4 bis 9 Mol-%, besonders bevorzugt im Bereich von 7 bis 8 Mol-%. Ein solcher Poly(vinylalkohol-co-vinylester), vorzugsweise ein Poly(vinylalkohol-co-vinylacetat), weist eine gute Löslichkeit in wässrigen Lösungsmitteln insbesondere bei einer Temperatur von ≤ 15 °C und über einen weiten pH-Wertebereich auf.

Die wasserlösliche Polymerzusammensetzung kann mindestens eines der hierin beschriebenen Polyvinylalkohol-Copolymere P1 oder ein Gemisch von a) mindestens zwei der vorgenannten Polyvinylalkohol-Copolymere P1 oder b) mindestens zwei der vorgenannten Polyvinylalkohol-Copolymere P1 und Polyvinylalkohole P2 umfassen. In einer Ausführungsform der Erfindung umfasst die wasserlösliche Polymerzusammensetzung mindestens ein Polyvinylalkohol-Copolymer P1 und mindestens einen Polyvinylalkohol P2, d. h. ein Gemisch aus mindestens ein Polyvinylalkohol-Copolymer P1 und mindestens einen Polyvinylalkohol P2.

In einer solchen Ausführungsform der Erfindung umfasst die wasserlösliche Polymerzusammensetzung mindestens ein Polyvinylalkohol-Copolymer P1.2 und mindestens einen der vorgenannten Polyvinylalkohole P2, wobei der Gesamtgehalt an Wiederholungseinheiten des mindestens einen Comonomers, ausgewählt aus Pentaerythritolacrylat sowie optional Acrylsäure, d. h. insbesondere der Gesamtgehalt an Wiederholungseinheiten der Formeln (III) und (IV), in einem Bereich von in Summe 10 bis 20 Gew.-%, bezogen auf das Gesamtgewicht von Polyvinylalkohol-Copolymer P1 und Polyvinylalkohol P2, liegt. In diesem Fall ist das Polyvinylalkohol-Copolymer P1 als Ausführungsform P1.2 somit so auszuwählen, dass der vorgegebenen Comonomergehalt, bezogen auf das Gesamtgewicht an Polyvinylalkohol-Copolymer P1 und Polyvinylalkohol P2, eingehalten wird. Um den Gesamtgehalt an Wiederholungseinheiten der Formeln (III) und (IV) in einem Bereich von in Summe 10 bis 20 Gew.-%, bezogen auf das Gesamtgewicht von Polyvinylalkohol-Copolymer P1 und Polyvinylalkohol P2, einzuhalten, ist in einer Polymerzusammensetzung, welche sowohl Polyvinylalkohol-Copolymer P1 als auch Polyvinylalkohol P2 umfasst, aufgrund des Bezugs des Gehalts an Wiederholungseinheiten der Formeln (III) und (IV) auf das Gesamtgewicht von Polyvinylalkohol-Copolymer P1 und Polyvinylalkohol P2, der Comonomergehalt im Polyvinylalkohol-Copolymer P1.2 höher zu wählen, als wenn nur Polyvinylalkohol-Copolymer P1 bzw. Polyvinylalkohol-Copolymer P1.1 (d.h. ohne Polyvinylalkohol P2) in der Polymerzusammensetzung vorliegen würde. Polyvinylalkohol-Copolymer P1.2 unterscheidet sich somit von der hierin beschriebenen Ausführungsform des Polyvinylalkohol-Copolymers P1.1 insbesondere im Comonomergehalt.

In einer weiteren bevorzugten Ausführungsform der Erfindung besteht die wasserlösliche Polymerzusammensetzung zu mindestens 75 Gew.-%, bezogen auf das Gesamtgewicht der Polymerzusammensetzung, vorzugsweise zu mindestens 85 Gew.-%, besonders bevorzugt zu mindestens 90 Gew.-%, aus a) mindestens einem Polyvinylalkohol-Copolymer P1 oder b) mindestens einem Polyvinylalkohol-Copolymer P1 und mindestens einem Polyvinylalkohol P2.

In einer bevorzugten Ausführungsform der Erfindung besteht die wasserlösliche Polymerzusammensetzung zu mindestens 75 Gew.-%, bezogen auf das Gesamtgewicht der Polymerzusammensetzung, vorzugsweise zu mindestens 85 Gew.-%, besonders bevorzugt zu mindestens 90 Gew.-%, aus mindestens einem Polyvinylalkohol-Copolymer P1, wobei der Gehalt an Wiederholungseinheiten des mindestens einen Comonomers in einem Bereich von in Summe 10 bis 20 Gew.-%, bezogen auf das Gesamtgewicht von Polyvinylalkohol-Copolymer P1, liegt. Dieses Polyvinylalkohol-Copolymer P1 entspricht dem Polyvinylalkohol-Copolymer P1.1.

In einer alternativen Ausführungsform der Erfindung besteht die wasserlösliche Polymerzusammensetzung zu mindestens 75 Gew.-%, bezogen auf das Gesamtgewicht der Polymerzusammensetzung, vorzugsweise zu mindestens 85 Gew.-%, besonders bevorzugt zu mindestens 90 Gew.-%, aus mindestens einem Polyvinylalkohol P2.

In einer weiteren alternativen Ausführungsform der Erfindung besteht die wasserlösliche Polymerzusammensetzung zu mindestens 75 Gew.-%, bezogen auf das Gesamtgewicht der Polymerzusammensetzung, vorzugsweise zu mindestens 85 Gew.-%, besonders bevorzugt zu mindestens 90 Gew.-%, aus einem Gemisch aus mindestens einem Polyvinylalkohol-Copolymer P1 und mindestens einem Polyvinylalkohol P2, wobei die Polymerzusammensetzung einen Gehalt an Wiederholungseinheiten des mindestens einen Comonomers in einem Bereich von in Summe 10 bis 20 Gew.-%, bezogen auf das Gesamtgewicht von Polyvinylalkohol-Copolymer P1 und Polyvinylalkohol P2, aufweist. Das hierin einzusetzende Polyvinylalkohol-Copolymer P1 entspricht dem Polyvinylalkohol-Copolymer P1.2.

Neben dem Polyvinylalkohol-Copolymer P1 bzw. dem Polyvinylalkohol P2 umfasst die Polymerzusammensetzung vorzugsweise Wasser. In einer Ausführungsform der Erfindung liegt der Wassergehalt in der Polymerzusammensetzung vorzugsweise in einem Bereich von 1 bis 7 Gew.-%, vorzugsweise 3 bis 6 Gew.-%, bezogen auf das Gesamtgewicht der Polymerzusammensetzung. In einer weiteren Ausführungsform der Erfindung liegt der Wassergehalt in der Polymerzusammensetzung vorzugsweise in einem Bereich von 1 bis 7 Gew.-%, vorzugsweise 3 bis 6 Gew.-%, bezogen auf das Gesamtgewicht an Polyvinylalkohol-Copolymer P1 in der Polymerzusammensetzung. In einer weiteren Ausführungsform der Erfindung liegt der Wassergehalt in der Polymerzusammensetzung vorzugsweise in einem Bereich von 1 bis 7 Gew.-%, vorzugsweise 3 bis 6 Gew.-%, bezogen auf das Gesamtgewicht an Polyvinylalkohol P2 in der Polymerzusammensetzung. In einer weiteren Ausführungsform der Erfindung liegt der Wassergehalt in der Polymerzusammensetzung vorzugsweise in einem Bereich von 1 bis 7 Gew.-%, vorzugsweise 3 bis 6 Gew.-%, bezogen auf das Gesamtgewicht an Polyvinylalkohol-Copolymer P1 und Polyvinylalkohol P2 in der Polymerzusammensetzung. Es wurde beobachtet, dass der Wasseranteil in der Polymerzusammensetzung sowohl die mechanischen Eigenschaften als auch die Löslichkeit der Polymerzusammensetzung positiv beeinflusst. Es wird angenommen, dass die Wassermoleküle in der Polymerzusammensetzung den Kristallisationsgrad des Polyvinylalkohol-Copolymers P1 und/oder des Polyvinylalkohols P2 beeinflussen. Das Wasser kann beispielswiese in Form von Restfeuchte aus dem Herstellungsprozess des Polyvinylalkohol-Copolymers P1 und/oder des Polyvinylalkohols P2 vorliegen. Es kann ebenso aus der Umgebungsluft aufgenommen werden. Um die hierin genannten, bevorzugten Wassergehalte einhalten zu können, kann es daher erforderlich sein, die Polymerzusammensetzung bzw. die erfindungsgemäßen, wasserlöslichen Behältnisse von Umgebungen mit hoher relativer Feuchtigkeit abzuschirmen.

Neben a) dem Polyvinylalkohol-Copolymer P1 oder b) dem Polyvinylalkohol-Copolymer P1 und dem Polyvinylalkohol P2 kann die wasserlösliche Polymerzusammensetzung optional zusätzlich bis zu 18 Gew.-% bezogen auf das Gesamtgewicht der Polymerzusammensetzung, vorzugsweise bis zu 15 Gew.-%, insbesondere bis zu 5 Gew.-%, an Zusatzstoffen umfassen. Diese dienen insbesondere dazu die Eigenschaften der Polymerzusammensetzung weiter zu verbessern.

Geeignete optionale Zusatzstoffe sind dem Fachmann bekannt und können in Hinblick auf die Bedürfnisse hinsichtlich der mechanischen und chemischen Stabilität sowie der Verarbeitbarkeit ausgewählt werden. Geeignete Zusatzstoffe im Sinne der vorliegenden Erfindung sind beispielsweise Stabilisatoren und Antioxidantien, Mittel gegen Wärmezersetzung und Zersetzung durch ultraviolettes Licht, Gleit- und Entformungsmittel, Farbstoffe und Pigmente sowie Weichmacher. Die optionalen Zusatzstoffe können auch optional weitere Polymere umfassen, insbesondere wasserlösliche Polymere, die von den hierin offenbarten Polyvinylalkohol-Copolymeren P1 und Polyvinylalkoholen P2 verschieden sind.

Antioxidantien und Wärmestabilisatoren, die der Polymerzusammensetzung zugesetzt werden können, sind z. B. Halogenide von Metallen der Gruppe I des Periodensystems, z. B. Natrium-, Kalium- und/oder Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Polymerzusammensetzung, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der Polymerzusammensetzung, eingesetzt werden.

Gleit- und Entformungsmittel, die in der Regel in Mengen bis zu 1 Gew.-%, bezogen auf das Gewicht der Polymerzusammensetzung, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet sind insbesondere Zink-, Magnesium- und Calciumstearat sowie *N,N*'-Ethylen-bis-stearamid. Besonders bevorzugt wird der Polymerzusammensetzung Calciumstearat als Zusatzstoff zugegeben.

Bevorzugterweise kann das wasserlösliche Behältnis eine mittlere Wandstärke im Bereich von 10 bis 45 µm haben, besonders bevorzugt im Bereich von ≥ 20 bis ≤ 35 µm. Dadurch kann ein optimales Verhältnis zwischen guter Löslichkeit und guter mechanischer Stabilität des wasserlöslichen Behältnisses erreicht werden.

Die Dimensionierung der Größe des wasserlöslichen Behältnisses kann der Fachmann im Hinblick auf die aufzunehmende Menge an Farbstoff oder Farbstoffzusammensetzung wählen. Ist das Behältnis als Folienbeutel ausgeführt, könnte es beispielsweise Abmessungen in der Länge und/oder der Breite im Bereich von jeweils 10 bis 200 mm haben.

Das erfindungsgemäße wasserlösliche Behältnis ist mit einem Zugabestoff oder einer Zugabestoffzusammensetzung befüllt. Dieser bzw. diese umfasst mindestens einen Farbstoff oder mindestens eine Farbstoffzusammensetzung. Der Zugabestoff oder die Zugabestoffzusammensetzung kann optional weitere Stoffe umfassen, welche einem wässrigen Lösungsmittel zugegeben werden sollen. Das erfindungsgemäße Behältnis vereinfacht so auch die Zugabe der weiteren Stoffe. Als Beispiele für geeignete Zugabestoffe bzw. Zugabestoffzusammensetzungen, welche häufig in wässrigen Alkalimetallcyanidlösungen in Minen eingesetzt werden, sind pH-Puffer-Salze, pH-Korrekturmittel, Basen (z.B. NaOH), Wasserenthärtungssalze, sowie Gemische davon zu nennen.

Der Farbstoff bzw. die Farbstoffzusammensetzung ist vorzugsweise wasserlöslich.

"Wasserlöslich" bedeutet im Rahmen dieser Erfindung bezogen auf den Farbstoff bzw. die Farbstoffzusammensetzung, dass sich dieser bzw. diese zu mindestens 50 Gew.-% bezogen auf das Gesamtgewicht des Farbstoffs bzw. der Farbstoffzusammensetzung auflöst, vorzugsweise zu mindestens 75 Gew.-%, insbesondere zu mindestens 95 Gew.-%. Besonders bevorzugt löst sich der wasserlösliche Farbstoff bzw. die wasserlösliche Farbstoffzusammensetzung rückstandsfrei auf, d. h. der Farbstoff bzw. die Farbstoffzusammensetzung löst sich zu 100 Gew.-% in dem wässrigen Lösungsmittel auf. Der mindestens eine wasserlösliche Farbstoff bzw. die mindestens eine wasserlösliche Farbstoffzusammensetzung weist vorzugsweise eine Löslichkeit in Wasser (demin.) von 100 g/L auf.

Vorzugsweise wird ein Farbstoff bzw. eine Farbstoffzusammensetzung eingesetzt, welche chemisch stabil gegenüber wässrigen Lösungen von Alkalimetallcyanidverbindungen in einem Temperaturbereich von 0 bis 50 °C und/oder mit einem pH-Wert im Bereich von 6 bis 14. Dies bedeutet insbesondere, dass der Farbstoff bzw. die Farbstoffzusammensetzung nach dem Auflösen in einem wässrigen Lösungsmittel, welches mindestens eine Alkalimetallcyanidverbindung enthält und welches außerdem eine Temperatur im Bereich von 0 bis 50 °C und/oder einen pH-Wert im Bereich von 6 bis 14 hat, keine chemischen Reaktionen mit den enthaltenen Komponenten hat, insbesondere den Alkalimetallcyanidionen und den Hydroxidionen, die eine Veränderung der Farbgebung des Farbstoffs bzw. des oder der in der Farbstoffzusammensetzung enthaltenen Farbstoffe in der wässrigen Lösung hinsichtlich der Farbintensität und/oder des Farbtons zur Folge hat. Dies trägt dazu bei, dass eine konstante und reproduzierbare Einfärbung der alkalimetallcyanidhaltigen wässrigen Lösung erhalten werden kann.

In einer bevorzugten Ausführungsform der Erfindung umfasst der mindestens eine Farbstoff oder die mindestens eine Farbstoffzusammensetzung mindestens einen wasserlöslichen Azo-Farbstoff. Geeignete Azo-Farbstoffe sind dem Fachmann bekannt. Stärker bevorzugt umfasst der mindestens eine Farbstoff oder die mindestens eine Farbstoffzusammensetzung mindestens einen Azo-Farbstoff, welcher in einem wässrigen Lösungsmittel, welches Alkalimetallcyanidionen und gegebenenfalls Hydroxidionen enthält, einen roten oder blauen Farbton aufweist.

In einer besonders bevorzugten Ausführungsform der Erfindung umfasst der mindestens eine Farbstoff oder die mindestens eine Farbstoffzusammensetzung mindestens einen wasserlöslichen Azo-Farbstoff, ausgewählt aus Dinatrium-6-hydroxy-5-[(E)-(2-methoxy-5-methyl-4-sulfonatophenyl)diazenyl]-2-naphthalinsulfonat (Allurarot, Red 40, E 129), Dinatrium-4-hydroxy-3-[(E)-(4-sulfonato-1-naphthyl)diazenyl]naphthalin-1-sulfonat (Carmoisine, Food Red 3, Azorubin, Acid Red 14, E 122) und Kombinationen davon. Die chemischen Strukturen dieser Verbindungen sind nachfolgend dargestellt.

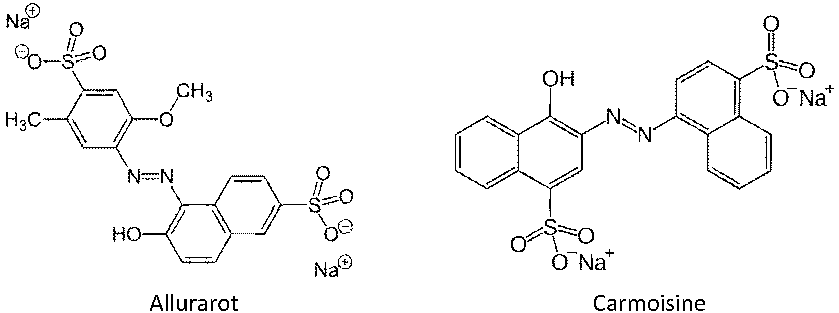

Der Zugabestoff bzw. die Zugabestoffzusammensetzung kann in Form eines Feststoffs, beispielsweise als Pulver, Granulat oder in gepresster Form, beispielsweise als Tablette, in Form einer Suspension oder in Form einer Lösung in dem wasserlöslichen Behältnis vorliegen. Sofern der Zugabestoff bzw. die Zugabestoffzusammensetzung in Form einer Suspension oder Lösung in dem wasserlöslichen Behältnis vorliegt, sind der oder die flüssigen Bestandteile der Suspension bzw. der Lösung nicht geeignet, die Polymerzusammensetzung, aus der das wasserlöslichen Behältnis gebildet ist, an oder aufzulösen. Geeignete Lösungsmittel sind organische Lösungsmittel, die selbst gut wasserlöslich sind. Hervorzuheben sind insbesondere Aceton und Ethanol. Die dadurch bei der Anwendung zur Einfärbung von wässrigen Cyanidlösungen eingebrachten Mengen an organischen Lösungsmitteln sind vernachlässigbar und stören bei der weiteren Verwendung nicht.

Bei Zugabestoffen bzw. Zugabestoffzusammensetzungen in Form von Pulvern trägt die große Oberfläche des Pulvers zu einer schnellen Löslichkeit bei. Pulver sind häufig kostengünstig und leicht erhältlich.

Zugabestoffe bzw. Zugabestoffzusammensetzungen in Form von Granulaten (ebenso wie Tabletten und Briketts) neigen im Vergleich zu Pulvern zu einer geringeren Staubbildung. Dies ist insbesondere bei den Zusammensetzungen mit Farbstoffen wünschenswert, um ein Verfärben der Produktionsanlage zu vermeiden. Auch bei potentiellen Gefahrstoffen ist die Vermeidung von Stäuben wünschenswert.

Zugabestoffe bzw. Zugabestoffzusammensetzungen in Form von Suspensionen reduzieren die Gefahr, dass der Zugabestoff bzw. die Zugabestoffzusammensetzung der Polymerzusammensetzung des erfindungsgemäßen Behältnisses einen Teil des enthaltenden Wassers entzieht. Durch die Reduzierung des Wasseranteils in der Polymerzusammensetzung kann deren Löslichkeit verschlechtern werden

Werden Zugabestoffe bzw. Zugabestoffzusammensetzungen in Form von Lösungen eingesetzt, unterstützt die Lösungsform den Lösungsprozess. Das eigentliche Auflösen der Zugabestoffe bzw. Zugabestoffzusammensetzungen geschieht so schon in einem vorgelagerten Schritt. Die Lösung muss anschließend nur noch mit dem gewünschten Lösungsmittel vermischt und so verdünnt werden. Dies ist insbesondere für Zugabestoffe bzw. Zugabestoffzusammensetzungen mit geringerer Wasserlöslichkeit relevant. Gleichzeitig können Stäube vermieden werden.

In der Granulatform oder gepressten Form kann der Zugabestoff bzw. die Zugabestoffzusammensetzung auch mindestens ein Bindemittel enthalten, vorzugsweise ein wasserlösliches Bindemittel. Vorteilhaft kann als Bindemittel beispielsweise ein wasserlösliches Polymer Verwendung finden, insbesondere ein erfindungsgemäßes wasserlösliches Polyvinylalkohol-Copolymer P1 und/oder ein erfindungsgemäßer wasserlöslicher Polyvinylalkohol P2.

Das erfindungsgemäße wasserlösliche Behältnis wird vorteilhaft mit mindestens einer festen, wasserlöslichen Alkalimetallcyanidverbindung eingesetzt. Diese Verwendung ermöglicht ein einfaches Verfahren zur Herstellung einer gefärbten, wässrigen Zusammensetzung Z2, umfassend mindestens eine Alkalimetallcyanidverbindung und mindestens einen Farbstoff. Die mindestens eine Alkalimetallcyanidverbindung und der mindestens eine Farbstoff können dazu vorteilhaft in Form einer Voranwendungszusammensetzung (Zusammensetzung Z1) bereitgestellt werden, welche durch Auflösen in einem wässrigen Lösungsmittel die Anwendungszusammensetzung (Zusammensetzung Z2) bereitstellt.

Gegenstand der Erfindung ist daher auch eine Zusammensetzung Z1, umfassend mindestens eine feste, wasserlösliche Alkalimetallcyanidverbindung und mindestens ein erfindungsgemäßes, wasserlösliches Behältnis. Die in dieser Zusammensetzung Z1 eingesetzte feste, wasserlösliche Alkalimetallcyanidverbindung umfasst vorzugsweise mindestens ein Alkalimetallcyanidsalz. Besonders bevorzugte Ausführungsformen der Erfindung umfassen mindestens Natriumcyanid, Kaliumcyanid, oder Gemische dieser Alkalimetallcyanide, besonders bevorzugt Natriumcyanid. Diese werden insbesondere in der Minenindustrie als Laugungsmittel bei der Gold- und Silbergewinnung genutzt.

Die feste, wasserlösliche Alkalimetallcyanidverbindung kann beispielsweise in Form von Pulver, eines Granulates, Tabletten oder Briketts vorliegen.

Das in der Zusammensetzung Z1 eingesetzte wasserlösliche Behältnis entspricht dem zuvor beschriebenen erfindungsgemäßen wasserlöslichen Behältnis. Sämtliche zuvor gemachten Definitionen und beschriebenen Ausführungsformen des wasserlöslichen, erfindungsgemäßen Behältnisses sind auch im Zusammenhang mit der erfindungsgemäßen Zusammensetzung Z1 zutreffend und übertragbar.

Es wurde beobachtet, das die erfindungsgemäßen, wasserlöslichen Behältnisse auch nach längerer Lagerung in Kontakt mit den genannten Alkalimetallcyanidverbindung eine weiterhin gute Löslichkeit in wässrigen Lösungsmitteln aufweisen.

Vorzugsweise liegt das Gewichtsverhältnis (Masse_{Farbstoff}/Masse_{Alkalimetallcyanid}) von wasserlöslichem Farbstoff zu wasserlöslicher Alkalimetallcyanidverbindung in der erfindungsgemäßen Zusammensetzung Z1 in einem Bereich von 0,00002 : 5 bis 0,0002 : 5.

Vorzugsweise wird die Zusammensetzung Z1 in einem Gebinde bereitgestellt, insbesondere in einem Gebinde, welches herkömmlich zum Verkauf, Transport und/oder Weiterverarbeitung der eingesetzten Alkalimetallcyanidverbindungen eingesetzt wird. Vorzugsweise ist das Gebinde ausgewählt aus einem Container, einem Big Bag, einer Box, einem Big Bag in einer Box, einer Trommel, insbesondere einem Container, einem 1000-kg-Big Bag in einer Box, oder einem 1000-kg-Big Bag. Dabei kann das Gebinde so ausgebildet sein, dass der Lösungsvorgang in der Lösestation unmittelbar in dem Gebinde durch Zugabe des wässrigen Lösungsmittels erfolgen kann. Vorzugsweise wird die Zusammensetzung Z1 in dem Gebinde vor dem Kontakt mit hoher relativer Feuchtigkeit geschützt. Dies reduziert die Aufnahme von Wasser sowohl durch die Alkalimetallcyanidverbindungen als auch durch die erfindungsgemäßen Behältnisse und gewährleistet optimale Lösungseigenschaften der Zusammensetzung Z1 beim Anwender.

Ein weiterer Gegenstand der Erfindung ist ein Verfahren zur Herstellung der zuvor beschriebenen Zusammensetzung Z1, umfassend mindestens eine feste, wasserlösliche Alkalimetallcyanidverbindung und mindestens ein erfindungsgemäßes wasserlösliches Behältnis, wobei das Verfahren mindestens das Zusammenbringen des mindestens einen wasserlöslichen Behältnisses mit der mindestens einen festen, wasserlöslichen Alkalimetallcyanidverbindung umfasst, und wobei das wasserlösliche Behältnis einen Zugabestoff oder eine Zugabestoffzusammensetzung mit mindestens einem wasserlöslichen Farbstoff oder mindestens einer wasserlöslichen Farbstoffzusammensetzung enthält. Vorzugsweise umfasst das Verfahren zur Herstellung der Zusammensetzung Z1 mindestens die folgenden Verfahrensschritte:
(i) Bereitstellen einer vorbestimmten Menge der mindestens einen festen, wasserlöslichen Alkalimetallcyanidverbindung in einem Gebinde;
(ii) Zugeben des mindestens einen wasserlöslichen Behältnisses zu der mindestens einen Alkalimetallcyanidverbindung in dem Gebinde, wobei das wasserlösliche Behältnis einen Zugabestoff oder eine Zugabestoffzusammensetzung mit mindestens einem wasserlöslichen Farbstoff oder mindestens einer wasserlöslichen Farbstoffzusammensetzung enthält;
wobei die Menge der mindestens einen wasserlöslichen Alkalimetallcyanidverbindung in dem Gebinde und die Menge des mindestens einen Farbstoffs oder der mindestens einen Farbstoffzusammensetzung in dem mindestens einen wasserlöslichen Behältnis so bemessen ist, dass nach dem Auflösen der erhaltenen Zusammensetzung Z1 in einer vorgegebenen Menge eines wässrigen Lösungsmittels eine eingefärbte, wässrige Alkalimetallcyanidlösung einer vorgegebenen Konzentration mit einem vorbestimmten Extinktionskoeffizienten erhalten wird. Der Extinktionskoeffizient kann dabei an die jeweiligen Bedürfnisse so angepasst werden, dass eine ausreichend starke Einfärbung der eingefärbten, wässrigen Zusammensetzung Z2, gewährleistet und die leichte Identifizierung cyanidhaltiger Lösungen sichergestellt wird. Der Extinktionskoeffizient kann mittels UV/Vis-Spektroskopie oder Photometrie ermittelt werden.

Das in dem Verfahren eingesetzte Gebinde ist vorzugsweise ein Gebinde, welches zum Verkauf, Transport und/oder Weiterverarbeitung der eingesetzten Alkalimetallcyanidverbindungen eingesetzt wird. Vorzugsweise ist das Gebinde ausgewählt aus einem Container, einem Big Bag, einer Box, einem Big Bag in einer Box, einer Trommel, einem Container, einem 1000-kg-Big Bag in einer Box, oder einem 1000-kg-Big Bag. Dabei kann das Gebinde so ausgebildet sein, dass der Lösungsvorgang in der Lösestation unmittelbar in dem Gebinde durch Zugabe des wässrigen Lösungsmittels erfolgen kann.

Optional kann ein Mischen der mindestens einen festen, wasserlöslichen Alkalimetallcyanidverbindung und des mindestens einen erfindungsgemäßen wasserlöslichen Behältnisses erfolgen, um eine gleichmäßige Verteilung der Komponenten in dem Gebinde zu erreichen.

Die Menge an fester, wasserlöslicher Alkalimetallcyanidverbindung und des mindestens einen Farbstoffs bzw. der mindestens einen Farbstoffzusammensetzung kann optimal aufeinander abgestimmt werden und auf die Bedürfnisse der späteren Verwendung angepasst werden. So ist es möglich in einfacher Weise eingefärbte wässrige Alkalimetallcyanidlösungen bereitzustellen, welche eine vorgegebenen Alkalimetallcyanidkonzentration und Farbstoffkonzentration aufweisen. Alkalimetallcyanidlösungen gleicher Konzentration weisen dann die gleiche Farbintensität auf.

Vorzugsweise liegt das Gewichtsverhältnis (Masse_{Farbstoff}/Masse_{Alkalimetallcyanid}) von wasserlöslichem Farbstoff zu wasserlöslicher Alkalimetallcyanidverbindung in dem erfindungsgemäßen Verfahren zur Herstellung der zuvor beschriebenen Zusammensetzung Z1, umfassend mindestens eine wasserlösliche Alkalimetallcyanidverbindung und mindestens ein erfindungsgemäßes wasserlösliches Behältnis, in einem Bereich von 0,00002 : 5 bis 0,0002 : 5.

Die nach dem erfindungsgemäßen Verfahren erhaltene Zusammensetzung Z1 kann vorteilhaft in dem nachfolgend beschriebenen, erfindungsgemäßen Verfahren zur Herstellung einer eingefärbten, wässrigen Zusammensetzung Z2 eingesetzt werden. Das vorgestellte Verfahren zur Herstellung einer Zusammensetzung Z1 entspricht dabei den Verfahrensschritten (i) und (ii) des dem erfindungsgemäßen Verfahren zur Herstellung einer eingefärbten, wässrigen Zusammensetzung Z2, umfassend mindestens eine wasserlösliche Alkalimetallcyanidverbindung und mindestens einen wasserlöslichen Farbstoff.

Ein weiterer Gegenstand der Erfindung ist ein Verfahren zur Herstellung einer eingefärbten, wässrigen Zusammensetzung Z2, welche mindestens eine Alkalimetallcyanidverbindung und mindestens einen Farbstoff umfasst. Das Verfahren umfasst das Einbringen mindestens eines erfindungsgemäßen, wasserlöslichen Behältnisses in ein wässriges Lösungsmittel, wobei das mindestens eine wasserlösliche Behältnis mindestens einen wasserlöslichen Farbstoff oder mindestens eine wasserlösliche Farbstoffzusammensetzung enthält.

Das erfindungsgemäße Verfahren zur Herstellung einer eingefärbten, wässrigen Zusammensetzung Z2, welche mindestens eine wasserlösliche Alkalimetallcyanidverbindung und mindestens einen wasserlöslichen Farbstoff umfasst, umfasst vorzugsweise mindestens die folgenden Verfahrensschritte:
(i) Bereitstellen mindestens eines wasserlöslichen, erfindungsgemäßen Behältnisses, wobei das wasserlösliche Behältnis einen Zugabestoff oder eine Zugabestoffzusammensetzung mit mindestens einem wasserlöslichen Farbstoff oder mindestens einer wasserlöslichen Farbstoffzusammensetzung enthält;
(ii) Bereitstellen mindestens einer festen, wasserlöslichen Alkalimetallcyanidverbindung;
(iii) Einbringen des mindestens einen wasserlöslichen Behältnisses und der mindestens einen festen, wasserlöslichen Alkalimetallcyanidverbindung in ein wässriges Lösungsmittel; und
(iv) gegebenenfalls Mischen des mindestens einen wasserlöslichen Behältnisses und der mindestens einen wasserlöslichen Alkalimetallcyanidverbindung mit dem wässrigen Lösungsmittel, um das Auflösen des mindestens einen wasserlöslichen Behältnisses und der mindestens einen wasserlöslichen Alkalimetallcyanidverbindung in dem wässrigen Lösungsmittel zu unterstützen.

Das in dem Verfahren zur Herstellung einer gefärbten, wässrigen Zusammensetzung Z2, welche mindestens eine wasserlösliche Alkalimetallcyanidverbindung und mindestens einen wasserlöslichen Farbstoff umfasst, eingesetzte wasserlösliche Behältnis entspricht dem zuvor beschriebenen erfindungsgemäßen wasserlöslichen Behältnis. Sämtliche zuvor gemachten Definitionen und beschriebenen Ausführungsformen des wasserlöslichen, erfindungsgemäßen Behältnisses sind auch im Zusammenhang mit dem erfindungsgemäßen Verfahren zur Herstellung einer eingefärbten wässrigen Zusammensetzung Z2 zutreffend und übertragbar.

Die in dem Verfahren eingesetzte Alkalimetallcyanidverbindung umfasst mindestens eine wasserlösliche Alkalimetallcyanidverbindung, vorzugsweise mindestens ein Alkalimetallcyanidsalz. Besonders bevorzugte Ausführungsformen der Erfindung umfassen mindestens Natriumcyanid, Kaliumcyanid, oder Gemische dieser Alkalimetallcyanide. Diese werden insbesondere in der Minenindustrie als Laugungsmittel bei der Gold- und Silbergewinnung genutzt. Besonders bevorzugt wird aufgrund seiner Verfügbarkeit Natriumcyanid eingesetzt.

Die Alkalimetallcyanidverbindung liegt in Form eines Feststoffs vor, beispielsweise als Pulver, Granulat, Tabletten oder Briketts.

Zur Herstellung einer gefärbten, wässrigen Zusammensetzung Z2 gemäß dem erfindungsgemäßen Verfahren werden das mindestens eine wasserlösliche Behältnis und die mindestens eine wasserlösliche Alkalimetallcyanidverbindung in ein wässriges Lösungsmittel eingebracht.

In einer Ausführungsform der Erfindung werden das mindestens eine wasserlösliche Behältnis, welches einen Zugabestoff oder eine Zugabestoffzusammensetzung mit mindestens einem wasserlöslichen Farbstoff oder mindestens einer wasserlöslichen Farbstoffzusammensetzung enthält, und die mindestens eine wasserlösliche Alkalimetallcyanidverbindung gleichzeitig in das wässrige Lösungsmittel eingebracht.

In einer alternativen Ausführungsform der Erfindung wird zunächst das mindestens eine wasserlösliche Behältnis in das wässrige Lösungsmittel eingebracht und anschließend, d. h. zeitlich versetzt, die mindestens eine wasserlösliche Alkalimetallcyanidverbindung in das wässrige Lösungsmittel eingebracht.

In einer weiteren alternativen Ausführungsform der Erfindung wird zunächst die mindestens eine wasserlösliche Alkalimetallcyanidverbindung in das wässrige Lösungsmittel eingebracht, und anschließend, d. h. zeitlich versetzt, das mindestens eine wasserlösliche Behältnis in das wässrige Lösungsmittel.

Vorzugsweise werden das mindestens eine wasserlösliche Behältnis und die mindestens eine wasserlösliche Alkalimetallcyanidverbindung gleichzeitig in das wässrige Lösungsmittel eingebracht. Dadurch ist es möglich, dass das mindestens eine wasserlösliche Behältnis und die mindestens eine wasserlösliche Alkalimetallcyanidverbindung bereits vor dem Einbringen in das wässrige Lösungsmittel miteinander vermischt werden. Über die Farbgebung der wässrigen Lösung lässt sich so mit einfachen optischen Mitteln erkennen, dass eine wässrige Alkalimetallcyanidlösung vorliegt und einschätzen, welche Konzentration diese Lösung hat. Im Rahmen dieser Ausführungsform der Erfindung kann besonders vorteilhaft die zuvor beschriebene Zusammensetzung Z1, umfassend mindestens eine feste, wasserlösliche Alkalimetallcyanidverbindung und mindestens ein erfindungsgemäßes wasserlösliches Behältnis, verwendet werden.

Vorteilhaft kann in dem Verfahren zur Herstellung einer eingefärbten, wässrigen Zusammensetzung Z2 das mindestens eine wasserlösliche Behältnis und die mindestens eine feste, wasserlösliche Alkalimetallcyanidverbindung in Form der zuvor beschriebenen Zusammensetzung Z1, welche mindestens eine feste, wasserlösliche Alkalimetallcyanidverbindung und mindestens ein erfindungsgemäßes wasserlösliches Behältnis umfasst, eingesetzt werden.

In einer weiteren Ausführungsform der Erfindung werden das mindestens eine wasserlösliche Behältnis und die mindestens eine feste, wasserlösliche Alkalimetallcyanidverbindung zunächst nur in einen Teil des wässrigen Lösungsmittels eingebracht. Nachdem sich das mindestens eine wasserlösliche Behältnis und/oder die mindestens eine wasserlösliche Alkalimetallcyanidverbindung in dem Teil des wässrigen Lösungsmittels aufgelöst hat, wird anschließend das restliche wässrige Lösungsmittel zugegeben, um die gewünschte Konzentration der eingefärbten, wässrigen Zusammensetzung Z2 zu erreichen.

In einem optionalen Verfahrensschritt kann das Auflösen des mindestens einen wasserlöslichen Behältnisses und der mindestens einen wasserlöslichen Alkalimetallcyanidverbindung in dem wässrigen Lösungsmittel unterstützt werden, indem das mindestens eine wasserlösliche Behältnis und die mindestens eine wasserlösliche Alkalimetallcyanidverbindung mit dem wässrigen Lösungsmittel aktiv gemischt werden, beispielsweise mit Hilfe eines mechanischen Mischverfahrens, wobei ein statischer oder ein dynamischer Mischer zum Einsatz kommen kann.

Die eingefärbte, wässrige Zusammensetzung Z2 umfasst erfindungsgemäß mindestens einen wasserlöslichen Farbstoff, mindestens eine wasserlösliche Alkalimetallcyanidverbindung und mindestens Wasser als Lösungsmittel. Zudem umfasst die eingefärbte, wässrige Zusammensetzung Z2 die Bestandteile der gelösten Polymerzusammensetzung des wasserlöslichen Behältnisses. Die Konzentration an wasserlöslichem Farbstoff in der eingefärbten, wässrigen Zusammensetzung Z2 liegt vorzugsweise in einem Bereich von 0,000001 bis 0,0006 mol/L, stärker bevorzugt in einem Bereich von 0,000006 bis 0,00006 mol/L. Die Konzentration an wasserlöslicher Alkalimetallcyanidverbindung in der eingefärbten, wässrigen Zusammensetzung Z2 liegt vorzugsweise in einem Bereich von 1,5 bis 10 mol/L. Das molare Verhältnis von wasserlöslichem Farbstoff zu wasserlöslicher Alkalimetallcyanidverbindung in der eingefärbten, wässrigen Zusammensetzung Z2 liegt vorzugsweise in einem Bereich von 0,00002 : 5 bis 0,0001 : 5.

Die nicht verbindliche Empfehlung des International Cyanide Management Institutes sieht eine Konzentration von 0,03 g (Farbstoff)/L wässriger NaCN-Lösung mit einem NaCN-Gehalt von 23 % vor.

Der pH-Wert und die Temperatur des eingesetzten wässrigen Lösungsmittels können erfindungsgemäß über einen weiten Bereich variieren. Dies ermöglicht die Durchführung des Verfahrens unter verschiedenen äußeren Bedingungen, insbesondere in Minen in sehr unterschiedlichen Regionen der Welt.

Das wässrige Lösungsmittel kann zu Beginn des Verfahrensschritts (iii) einen pH-Wert in einem Bereich von pH 6 bis pH 14 haben, vorzugsweise in einem Bereich von pH 6,5 bis pH 13, insbesondere in einem Bereich von pH 6,5 bis pH 12,5. Das wässrige Lösungsmittel kann zu Beginn des Verfahrensschritts (iii) einen eine Temperatur von 0 bis 50 °C, insbesondere 0 bis 25 °C oder 0 bis 15 °C haben.

Die Erfindung wird anhand der nachfolgenden Beispiele näher erläutert.

### Beispiele

Vergleichsversuche mit Polvinylalkoholfolien mit einem Hydrolysegrad von mehr als 95 Mol- % haben gezeigt, dass sich diese nicht mit der gewünschten Geschwindigkeit auflösen. So waren beispielsweise auch nach Auflösezeiten von rund 20 Minuten noch sichtbare Folienstücke in dem wässrigen Lösungsmittel, insbesondere bei Temperaturen von ≤ 15 °C, enthalten.

Erfindungsgemäße Polymerbeutel, welche mit einem wasserlöslichen Farbstoff gefüllt sind, wurden hergestellt. Anschließend wurde das Lösungsverhalten der gefüllte Beutel untersucht, indem diese in eine wässrige Lösung gegeben werden und die Zeit t (Ex.ₘₐₓ) bis zur maximalen Einfärbung der Lösung (maximale Extinktion des Farbstoffs) durch den Farbstoff ermittelt wird.

Eine definierte Menge Farbstoff Carmoisin wird so berechnet, dass die Endkonzentration 0,03 g/L im Versuch erreicht wird. Diese Menge Farbstoff wird in Behältnisse, die in Form von Beuteln aus kommerziell erhältlichem, wasserlöslichen Polyvinylalkohol mit einem Hydrolysegrad von 91 - 94 Mol-% (PVOH-1: Poly(vinylalkohol-co-vinylacetat), Hersteller: GS-go soluble wasserlösliche Verpackungen GmbH, D-65582 Diez), kommerziell erhältlichem, wasserlöslichen Polyvinylalkohol-Copolymer mit einem Hydrolysegrad von 85 Mol-% (PVOH-2: Poly(vinylalkohol-co-vinylacetat-co-pentaerythritolacrylat), Hersteller: GS-go soluble wasserlösliche Verpackungen GmbH, D-65582 Diez), und kommerziell erhältlichem, wasserlöslichen Polyvinylalkohol-Copolymer mit einem Hydrolysegrad von 85 Mol-% und einem Anteil an Wiederholungseinheiten, die von Pentaerythritolacrylat abgeleitet sind, von 13 Mol-% (PVOH-3: Poly(vinylalkohol-co-vinylacetat-co-pentaerythritolacrylat), Hersteller: GS-go soluble wasserlösliche Verpackungen GmbH, D-65582 Diez) mit definiertem Format hergestellt werden, eingewogen und mit einem Folienschweißgerät verschlossen, sodass ein mit Farbstoff gefüllter Polymerbeutel erhalten wird. Die eingesetzten Polyvinylalkohole und Polyvinylalkohol-Copolymere wurden mittels IR- und/oder NMR-Spektroskopie wie hierin beschrieben analysiert. ¹H- und ¹³C-NMR-Spektroskipie wurde in DMSO-D6 als Lösungsmittel durchgeführt (Bruker Avance III 600; 600 MHz (H1); DMSO-D6; 27 °C; 1H-NMR: 32 scans, 30°Puls, Aquisitionszeit 2,7 sec., time domain 65536; ¹³C: 400 scans, 30°Puls, Aquisitionszeit 1,8 sec., time domain 131072, power gated decoupling). 13C-NMR-Spektroskipie wurde zusätzlich im Festkörper durchgeführt (Bruker Avance III HD; 400MHz (H1); Umgebungstemperatur (ca. 22°C); Pulssequenz: cross polarization with ramp, Rotationsfrequenz 9 kHz, 12735 scans, Relaxationsdelay 5 sec).

Dieser Polymerbeutel wird dann in ein definiertes Becherglas (600 ml, weit) mit definierten Flüssigkeit (demineralisierte Wasser, ggf. mit Zusatz von NaOH) in einem definierten pH gegeben und bei definierter Geschwindigkeit (300 U/min) und Temperatur mit einem Magnetrührer gerührt. Mit Freisetzung der ersten Färbung wird zügig in definierten zeitlichen Abständen (1, 2, 4, 5, 7, 10, 15, 20 Minuten) eine Probe entnommen und kolorimetrisch die Extinktion bei einer Wellenlänge 516 nm ermittelt. Hierzu wird ein handelsübliches Spektrometer eingesetzt (LICO 690, Spectralcolorimeter der Fa. Hach / Messung in 10 mm Rundküvette). Die Proben werden jeweils nach der Messung zügig wieder in das Becherglas zurückgeführt. Mit Erreichung des Extinktionsmaximums ist der Farbstoff komplett gelöst. Das Extinktionsmaximum ist erreicht, wenn bei zwei zeitlich aufeinanderfolgenden Messungen kein weiterer Anstieg des Extinktions-Messwertes beobachtet wird.

Die Versuchsparameter und Messergebnisse sind in Tabelle 1 zusammengefasst.

**Tabelle 1**

| Bsp. | Wasserlösliches Behältnis | | | | Flüssigkeit | pH | T [°C] | t (Ex.ₘₐₓ) [min] |
|---|---|---|---|---|---|---|---|---|
| | Material | Abmessungen [mm] | Wandstärke [µm] | Vorbehandlung | | | | |
| 1* | PVOH-1 | 100 x 130 | 30 | --- | H₂O | 6,5 | 20 | ca. 2,5 |
| 2* | PVOH-1 | 100 x 130 | 30 | --- | H₂O + NaOH | 11,0±0,2 | 18 | ca. 4 |
| 3 | PVOH-2 | 100 x 130 | 30 | --- | H₂O + NaOH | 11,0±0,2 | 8-9 | ca. 4 |
| 4 | PVOH-3 | 100 x 130 | 30 | --- | H₂O + NaOH | 11,0±0,2 | 8-9 | ca. 4 |
| 5 | PVOH-2 | 50 x 50 | 30 | --- | H₂O + NaOH | 11,0±0,2 | 8-9 | ca. 4,5 |
| 6 | PVOH-2 | 50 x 50 | 30 | --- | H₂O + NaOH | 11,0±0,2 | 2-4 | ca. 7 |
| 7 | PVOH-2 | 50 x 50 | 30 | nach 2 Wochen Lagerung im Trockenschrank bei 40°C | H₂O + NaOH | 11,0±0,2 | 8-10 | ca. 16 |
| 8 | PVOH-2 | 50 x 50 | 30 | nach 1 Monat Lagerung im Trockenschrank bei 40°C | H₂O + NaOH | 11,0±0,2 | 8-10 | ca. 15 |
| 9 | PVOH-2 | 50 x 50 | 30 | nach 1 Monat Lagerung bei Raumtemperatur in NaCN-Granulat | H₂O + NaOH | 11,0±0,2 | 8-10 | ca. 19 |
| 10 | PVOH-2 | 50 x 50 | 30 | nach 1 Monat Lagerung bei Raumtemperatur im Labor | H₂O + NaOH | 11,0±0,2 | 8-10 | ca. 10 |

| | | | | | | | | |
|---|---|---|---|---|---|---|---|---|
| *nicht erfindungsgemäß | | | | | | | | |

Beispiel 1 zeigt, dass der Farbstoff durch die nicht erfindungsgemäßen Polymerbeutel bei einer Temperatur von 20 °C und einem pH-Wert von pH 6,5 in einem wässrigen Lösungsmittel zügig freigesetzt wird. Das Extinktionsmaximum wird bereits nach 2,5 Minuten erreicht.

Bei einem pH-Wert von pH 11 verlängert sich die Zeit, bis das Extinktionsmaximum erreicht wird, nur geringfügig auf rund 4 Minuten. Auch bei einer Verringerung der Temperatur des Lösungsmittels auf 8 bis 9 °C verlängert sich dieser Zeitraum nicht (vgl. Bsp. 2 bis 4). Die Abmessung des Polymerbeutels hat nur einen geringen Einfluss auf die Lösungseigenschaften (vgl. Bsp. 5). Bei einer Temperatur in einem Bereich von 2 bis 4 °C wird eine immer noch rasche Auflösung mit einem Extinktionsmaximum der Lösung nach einem Zeitraum von rund 7 Minuten erreicht (vgl. Bsp. 6).

In den Beispielen 7 bis 10 wird der Einfluss der Lagerung des erfindungsgemäßen Polymerbeutels unter unterschiedlichen Bedingungen untersucht. Dazu wird der befüllte Polymerbeutel vor dem Auflösungsversuch bei Raumtemperatur (vgl. Bsp. 10), bei 40 °C (vgl. Bsp. 7 und 8), und in einem Behältnis mit Natriumcyanid-Granulat bei Raumtemperatur (vgl. Bsp. 9) gelagert. Der Vergleich mit Bsp. 5 zeigt, dass die Lagerungsbedingung dazu führt, dass das Extinktionsmaximum der Lösung erst später erreicht wird. Die größte Verzögerung wird bei dem Polymerbeutel beobachtet, der zuvor in einem Behältnis mit Natriumcyanid-Granulat bei Raumtemperatur (vgl. Bsp. 9) gelagert wurde. Das Extinktionsmaximum wird dennoch in weniger als 20 Minuten erreicht. Dieser Zeitraum ist für die Anwendung in einer Mine ausreichend kurz, da dieser Zeitraum auch für die Auflösung der Alkalimetallcyanidverbindung benötigt wird.

Der Vergleich der Beispiele 5, 7 und 8 zeigt, dass sich die Löslichkeit des erfindungsgemäßen Polymerbeutels durch die Lagerung bei erhöhten Temperaturen verschlechtert. Ohne an die Theorie gebunden zu sein, wird vermutet, dass dies auf eine Reduzierung des Wassergehalts in der Polymerzusammensetzung des Polymerbeutels während der Lagerung im Trockenschrank bei 40 °C und gegebenenfalls eine Erhöhung des Kristallisationsgrades zurückzuführen ist.

Aus den erfindungsgemäßen Beispielen geht auch hervor, dass sich das erfindungsgemäße Behältnis mit einer guten Geschwindigkeit auflöst und daher den Farbstoff mit einer guten Geschwindigkeit freisetzt.

Versuche mit Polvinylalkohol-Copolymer-Folien (PVOH-3) haben gezeigt, dass sich die guten Lösungseigenschaften der erfindungsgemäßen wasserlöslichen Behältnisse auch in wässrigen Lösungsmitteln mit einem hohen Gehalt an Salzen erzielen lassen.

Die Erfindung ermöglicht es, definierte Mengen Farbstoff in einer Polymerverpackung einer Alkalimetallcyanidverbindung in seiner kommerziellen Verpackung beizufügen. Für die Anwendung in der Mine, d. h. zur Herstellung einer gefärbten Alkalimetallcyanidlösung, kann die Polymerverpackung mit dem Farbstoff bzw. der Farbstoffzusammensetzung zusammen mit der Alkalimetallcyanidverbindung in einer herkömmlichen Lösestation in Wasser gelöst werden. Diese vermeidet einen zusätzlichen Arbeitsschritt im Löseprozess oder eine Anpassung der Lösestation. Durch das Verwenden des wasserlöslichen Behältnisses wird auch das Risiko vermindert, dass beispielsweise die Produktionsanlage zur Herstellung der Alkalimetallcyanidverbindungen mit dem Farbstoff bzw. der Farbstoffzusammensetzung kontaminiert wird.

## Patentansprüche

1. Wasserlösliches Behältnis, das zum Aufnehmen eines Zugabestoffes oder einer Zugabestoffzusammensetzung geeignet ist und mit einem Zugabestoff oder einer Zugabestoffzusammensetzung, umfassend mindestens einen Farbstoff oder mindestens eine Farbstoffzusammensetzung, befüllt ist,
wobei das wasserlösliche Behältnis eine Wandstärke im Bereich von 5 bis 50 µm hat, und wobei das wasserlösliche Behältnis eine wasserlösliche Polymerzusammensetzung umfasst oder aus einer wasserlöslichen Polymerzusammensetzung besteht, wobei die Polymerzusammensetzung umfasst:
a) mindestens ein Polyvinylalkohol-Copolymer P1 mit einem Hydrolysegrad im Bereich von 75 bis 95 Mol-%,
wobei das Polyvinylalkohol-Copolymer P1 ein Copolymer ist, welches
- Vinylalkohol-Wiederholungseinheiten,
- Vinylester-Wiederholungseinheiten und
- Wiederholungseinheiten mindestens eines Comonomers
umfasst,
wobei das mindestens eine Comonomer aus Pentaerythritolacrylat sowie optional Acrylsäure ausgewählt ist;
oder
b) mindestens ein Polyvinylalkohol-Copolymer P1 mit einem Hydrolysegrad im Bereich von 75 bis 95 Mol-%,
wobei das Polyvinylalkohol-Copolymer P1 ein Copolymer ist, welches
- Vinylalkohol-Wiederholungseinheiten,
- Vinylester-Wiederholungseinheiten und
- Wiederholungseinheiten mindestens eines Comonomers
umfasst,
wobei das mindestens eine Comonomer aus Pentaerythritolacrylat sowie optional Acrylsäure ausgewählt ist;
und
mindestens einen Polyvinylalkohol P2 mit einem Hydrolysegrad im Bereich von 87 bis 95 Mol-%;
wobei die Polymerzusammensetzung neben dem mindestens einen Polyvinylalkohol-Copolymer P1 oder dem mindestens einen Polyvinylalkohol-Copolymer P1 und dem mindestens einen Polyvinylalkohol P2 zusätzlich optional Zusatzstoffe enthalten kann;
wobei die Polymerzusammensetzung in dem Fall, dass sie mindestens ein Polyvinylalkohol-Copolymer P1 und kein Polyvinylalkohol P2 umfasst, einen Gehalt an Wiederholungseinheiten des mindestens einen Comonomers in einem Bereich von in Summe 10 bis 20 Gew.-%, bezogen auf das Gesamtgewicht von Polyvinylalkohol-Copolymer P1, aufweist; und
wobei die Polymerzusammensetzung in dem Fall, dass sie mindestens ein Polyvinylalkohol-Copolymer P1 und mindestens einen Polyvinylalkohol P2 umfasst, einen Gehalt an Wiederholungseinheiten des mindestens einen Comonomers in einem Bereich von in Summe 10 bis 20 Gew.-%, bezogen auf das Gesamtgewicht von Polyvinylalkohol-Copolymer P1 und Polyvinylalkohol P2, aufweist,
wobei der Hydrolysegrad des Polyvinylalkohol-Copolymers P1 und des Polyvinylalkohols P2 mittels quantitativer ¹H-NMR-Spektroskopie wie in der Beschreibung offenbart bestimmt wird, und
wobei die Zusammensetzung des Polyvinylalkohol-Copolymers P1 und des Polyvinylalkohols P2 mittels IR- und NMR-Spektroskopie wie in der Beschreibung offenbart bestimmt wird.

2. Wasserlösliches Behältnis nach Anspruch 1, wobei die wasserlösliche Polymerzusammensetzung mindestens ein Polyvinylalkohol-Copolymer P1 mit einem Hydrolysegrad im Bereich von 80 bis 90 Mol-% umfasst.

3. Wasserlösliches Behältnis nach Anspruch 1 oder 2, wobei die wasserlösliche Polymerzusammensetzung mindestens einen Polyvinylalkohol P2 mit einem Hydrolysegrad im Bereich von 91 bis 94 Mol-% umfasst.

4. Wasserlösliches Behältnis nach einem der Ansprüche 1 bis 3, wobei die wasserlösliche Polymerzusammensetzung mindestens ein Polyvinylalkohol-Copolymer P1, ausgewählt aus Poly(vinylalkohol-co-vinylester-co-pentaerythritolacrylat), Poly(vinylalkohol-co-vinylester-co-pentaerythritolacrylat-co-acrylsäure), und Derivaten davon, umfasst.

5. Wasserlösliches Behältnis nach einem der Ansprüche 1 bis 4, wobei die wasserlösliche Polymerzusammensetzung mindestens einen Polyvinylalkohol P2, ausgewählt aus einem Poly(vinylalkohol-co-vinylester), umfasst.

6. Wasserlösliches Behältnis nach einem der Ansprüche 1 bis 5, wobei die wasserlösliche Polymerzusammensetzung zu mindestens 75 Gew.-%, vorzugsweise mindestens 85 Gew.-%, besonders bevorzugt mindestens 90 Gew.-%, bezogen auf das Gesamtgewicht der Polymerzusammensetzung, aus dem mindestens einen Polyvinylalkohol-Copolymer P1 und/oder dem mindestens einen Polyvinylalkohol P2 besteht.

7. Wasserlösliches Behältnis nach einem der Ansprüche 1 bis 6, wobei die Polymerzusammensetzung umfasst:
- mindestens einen Polyvinylalkohol P2; und
- 1 bis 7 Gew.-% Wasser, bezogen auf das Gesamtgewicht an Polyvinylalkohol P2.

8. Wasserlösliches Behältnis nach einem der Ansprüche 1 bis 7, wobei die Polymerzusammensetzung umfasst:
- mindestens ein Polyvinylalkohol-Copolymer P1; und
- 1 bis 7 Gew.-% Wasser, bezogen auf das Gesamtgewicht an Polyvinylalkohol-Copolymer P1.

9. Wasserlösliches Behältnis nach einem der Ansprüche 1 bis 6, wobei die Polymerzusammensetzung 1 bis 7 Gew.-% Wasser, bezogen auf das Gesamtgewicht der Polymerzusammensetzung, umfasst.

10. Wasserlösliches Behältnis nach einem der Ansprüche 1 bis 9, wobei der mindestens eine Farbstoff oder die mindestens eine Farbstoffzusammensetzung mindestens einen wasserlöslichen Azo-Farbstoff, vorzugsweise ausgewählt aus Dinatrium-6-hydroxy-5-[(E)-(2-methoxy-5-methyl-4-sulfonatophenyl)diazenyl]-2-naphthalinsulfonat, Dinatrium-4-hydroxy-3-[(E)-(4-sulfonato-1-naphthyl)diazenyl]naphthalin-1-sulfonat und Gemischen davon, umfasst.

11. Zusammensetzung Z1, umfassend mindestens eine feste, wasserlösliche Alkalimetallcyanidverbindung und mindestens ein wasserlösliches Behältnis nach einem der Ansprüche 1 bis 10.

12. Verfahren zur Herstellung einer Zusammensetzung Z1 nach Anspruch 11, wobei das Verfahren mindestens das Zugeben des mindestens einen wasserlöslichen Behältnisses nach einem der Ansprüche 1 bis 10 zu der mindestens einen Alkalimetallcyanidverbindung umfasst.

13. Verfahren nach Anspruch 12 zur Herstellung einer Zusammensetzung Z1 nach Anspruch 11, wobei das Verfahren mindestens die folgenden Verfahrensschritte umfasst:
(i) Bereitstellen einer vorbestimmten Menge der mindestens einen festen, wasserlöslichen Alkalimetallcyanidverbindung in einem Gebinde;
(ii) Zugeben des mindestens einen wasserlöslichen Behältnisses nach einem der Ansprüche 1 bis 10 zu der mindestens einen Alkalimetallcyanidverbindung in dem Gebinde;
wobei die Menge der mindestens einen wasserlöslichen Alkalimetallcyanidverbindung in dem Gebinde und die Menge des mindestens einen Farbstoffs oder der mindestens einen Farbstoffzusammensetzung in dem mindestens einen wasserlöslichen Behältnis so bemessen ist, dass nach dem Auflösen der erhaltenen Zusammensetzung Z1 in einer vorgegebenen Menge eines wässrigen Lösungsmittels eine eingefärbte wässrige Alkalimetallcyanidlösung einer vorgegebenen Konzentration mit einem vorbestimmten Extinktionskoeffizienten erhalten wird.

14. Verwendung einer Zusammensetzung Z1 nach Anspruch 11 in einem Verfahren zur Herstellung einer gefärbten, wässrigen Zusammensetzung Z2.

15. Verfahren zur Herstellung einer eingefärbten, wässrigen Zusammensetzung Z2, welche mindestens eine Alkalimetallcyanidverbindung und mindestens einen Farbstoff umfasst, wobei das Verfahren das Einbringen mindestens eines wasserlöslichen Behältnisses nach einem der Ansprüche 1 bis 10 in ein wässriges Lösungsmittel umfasst, und wobei das mindestens eine wasserlösliche Behältnis mindestens einen wasserlöslichen Farbstoff oder mindestens eine wasserlösliche Farbstoffzusammensetzung enthält.

16. Verfahren nach Anspruch 15 zur Herstellung einer eingefärbten, wässrigen Zusammensetzung Z2, wobei das Verfahren mindestens die folgenden Verfahrensschritte umfasst:
(i) Bereitstellen mindestens eines wasserlöslichen Behältnisses nach einem der Ansprüche 1 bis 10, wobei das wasserlösliche Behältnis einen Zugabestoff oder eine Zugabestoffzusammensetzung mit mindestens einem wasserlöslichen Farbstoff oder mindestens einer wasserlöslichen Farbstoffzusammensetzung enthält;
(ii) Bereitstellen mindestens einer festen, wasserlöslichen Alkalimetallcyanidverbindung;
(iii) Einbringen des mindestens einen wasserlöslichen Behältnisses und der mindestens einen festen, wasserlöslichen Alkalimetallcyanidverbindung in ein wässriges Lösungsmittel;
(iv) gegebenenfalls Mischen des mindestens einen wasserlöslichen Behältnisses und der mindestens einen wasserlöslichen Alkalimetallcyanidverbindung mit dem wässrigen Lösungsmittel, um das Auflösen des mindestens einen wasserlöslichen Behältnisses und der mindestens einen wasserlöslichen Alkalimetallcyanidverbindung in dem wässrigen Lösungsmittel zu unterstützen.

17. Verfahren nach Anspruch 15 oder 16 zur Herstellung einer gefärbten, wässrigen Zusammensetzung Z2, wobei das mindestens eine wasserlösliche Behältnis und die mindestens eine feste, wasserlösliche Alkalimetallcyanidverbindung in Form einer Zusammensetzung Z1 nach Anspruch 11 eingesetzt wird.

## Claims

1. Water-soluble receptacle which is suitable for accommodating an additive or an additive composition and is filled with an additive or an additive composition comprising at least one dye or at least one dye composition,
wherein the water-soluble receptacle has a wall thickness in the range from 5 to 50 µm, and wherein the water-soluble receptacle comprises a water-soluble polymer composition or consists of a water-soluble polymer composition, wherein the polymer composition comprises:
a) at least one polyvinyl alcohol copolymer P1 having a degree of hydrolysis in the range from 75 to 95 mol%, wherein the polyvinyl alcohol copolymer P1 is a copolymer which comprises
- vinyl alcohol repeating units,
- vinyl ester repeating units and
- repeating units of at least one comonomer,
wherein the at least one comonomer is selected from pentaerythritol acrylate and also optionally acrylic acid;
or
b) at least one polyvinyl alcohol copolymer P1 having a degree of hydrolysis in the range from 75 to 95 mol%, wherein the polyvinyl alcohol copolymer P1 is a copolymer which comprises
- vinyl alcohol repeating units,
- vinyl ester repeating units and
- repeating units of at least one comonomer,
wherein the at least one comonomer is selected from pentaerythritol acrylate and also optionally acrylic acid;
and
at least one polyvinyl alcohol P2 having a degree of hydrolysis in the range from 87 to 95 mol%;
wherein, in addition to the at least one polyvinyl alcohol copolymer P1 or the at least one polyvinyl alcohol copolymer P1 and the at least one polyvinyl alcohol P2, the polymer composition can additionally optionally contain additive substances;
wherein the polymer composition, in the case in which it comprises at least one polyvinyl alcohol copolymer P1 and no polyvinyl alcohol P2, has a content of repeating units of the at least one comonomer in a range from in total 10% to 20% by weight, based on the total weight of polyvinyl alcohol copolymer P1; and
wherein the polymer composition, in the case in which it comprises at least one polyvinyl alcohol copolymer P1 and at least one polyvinyl alcohol P2, has a content of repeating units of the at least one comonomer in a range from in total 10% to 20% by weight, based on the total weight of polyvinyl alcohol copolymer P1 and polyvinyl alcohol P2,
wherein the degree of hydrolysis of the polyvinyl alcohol copolymer P1 and of the polyvinyl alcohol P2 is determined by means of quantitative ¹H NMR spectroscopy as disclosed in the description, and
wherein the composition of the polyvinyl alcohol copolymer P1 and of the polyvinyl alcohol P2 is determined by means of IR and NMR spectroscopy as disclosed in the description.

2. Water-soluble receptacle according to Claim 1, wherein the water-soluble polymer composition comprises at least one polyvinyl alcohol copolymer P1 having a degree of hydrolysis in the range from 80 to 90 mol%.

3. Water-soluble receptacle according to Claim 1 or 2, wherein the water-soluble polymer composition comprises at least one polyvinyl alcohol P2 having a degree of hydrolysis in the range from 91 to 94 mol%.

4. Water-soluble receptacle according to one of Claims 1 to 3, wherein the water-soluble polymer composition comprises at least one polyvinyl alcohol copolymer P1 selected from poly(vinyl alcohol-co-vinyl ester-co-pentaerythritol acrylate), poly (vinyl alcohol-co-vinyl ester-co-pentaerythritol acrylate-co-acrylic acid) and derivatives thereof.

5. Water-soluble receptacle according to one of Claims 1 to 4, wherein the water-soluble polymer composition comprises at least one polyvinyl alcohol P2 selected from a poly(vinyl alcohol-co-vinyl ester).

6. Water-soluble receptacle according to one of Claims 1 to 5, wherein the water-soluble polymer composition consists of the at least one polyvinyl alcohol copolymer P1 and/or the at least one polyvinyl alcohol P2 to an extent of at least 75% by weight, preferably at least 85% by weight, particularly preferably at least 90% by weight, based on the total weight of the polymer composition.

7. Water-soluble receptacle according to one of Claims 1 to 6, wherein the polymer composition comprises:
- at least one polyvinyl alcohol P2; and
- 1% to 7% by weight of water, based on the total weight of polyvinyl alcohol P2.

8. Water-soluble receptacle according to one of Claims 1 to 7, wherein the polymer composition comprises:
- at least one polyvinyl alcohol copolymer P1; and
- 1% to 7% by weight of water, based on the total weight of polyvinyl alcohol copolymer P1.

9. Water-soluble receptacle according to one of Claims 1 to 6, wherein the polymer composition comprises 1% to 7% by weight of water, based on the total weight of the polymer composition.

10. Water-soluble receptacle according to one of Claims 1 to 9, wherein the at least one dye or the at least one dye composition comprises at least one water-soluble azo dye, preferably selected from disodium 6-hydroxy-5-[(E)-(2-methoxy-5-methyl-4-sulfonatophenyl)diazenyl]-2-naphthalenesulfonate, disodium 4-hydroxy-3-[(E)-(4-sulfonato-1-naphthyl)diazenyl]naphthalene-1-sulfonate and mixtures thereof.

11. Composition Z1, comprising at least one solid water-soluble alkali metal cyanide compound and at least one water-soluble receptacle according to one of Claims 1 to 10.

12. Method for producing a composition Z1 according to Claim 11, wherein the method comprises at least the addition of the at least one water-soluble receptacle according to one of Claims 1 to 10 to the at least one alkali metal cyanide compound.

13. Method according to Claim 12 for producing a composition Z1 according to Claim 11, wherein the method comprises at least the following method steps:
(i) providing a predetermined amount of the at least one solid water-soluble alkali metal cyanide compound in a package;
(ii) adding the at least one water-soluble receptacle according to one of Claims 1 to 10 to the at least one alkali metal cyanide compound in the package;
wherein the amount of the at least one water-soluble alkali metal cyanide compound in the package and the amount of the at least one dye or of the at least one dye composition in the at least one water-soluble receptacle are dimensioned such that, after the dissolution of the obtained composition Z1 in a predefined amount of an aqueous solvent, a dyed aqueous alkali metal cyanide solution having a predefined concentration and having a predetermined extinction coefficient is obtained.

14. Use of a composition Z1 according to Claim 11 in a method for producing a coloured aqueous composition Z2.

15. Method for producing a dyed aqueous composition Z2 comprising at least one alkali metal cyanide compound and at least one dye, wherein the method comprises introducing at least one water-soluble receptacle according to one of Claims 1 to 10 into an aqueous solvent, and wherein the at least one water-soluble receptacle contains at least one water-soluble dye or at least one water-soluble dye composition.

16. Method according to Claim 15 for producing a dyed aqueous composition Z2, wherein the method comprises at least the following method steps:
(i) providing at least one water-soluble receptacle according to one of Claims 1 to 10, wherein the water-soluble receptacle contains an additive or an additive composition comprising at least one water-soluble dye or at least one water-soluble dye composition;
(ii) providing at least one solid water-soluble alkali metal cyanide compound;
(iii) introducing the at least one water-soluble receptacle and the at least one solid water-soluble alkali metal cyanide compound into an aqueous solvent;
(iv) optionally mixing the at least one water-soluble receptacle and the at least one water-soluble alkali metal cyanide compound with the aqueous solvent in order to promote the dissolution of the at least one water-soluble receptacle and the at least one water-soluble alkali metal cyanide compound in the aqueous solvent.

17. Method according to Claim 15 or 16 for producing a coloured aqueous composition Z2, wherein the at least one water-soluble receptacle and the at least one solid water-soluble alkali metal cyanide compound are used in the form of a composition Z1 according to Claim 11.

## Revendications

1. Contenant soluble dans l'eau, approprié pour recevoir un ingrédient ou une composition d'ingrédient et rempli d'un ingrédient ou d'une composition d'ingrédient, comprenant au moins un colorant ou au moins une composition de colorant,
le contenant soluble dans l'eau présentant une épaisseur de paroi dans la plage de 5 à 50 µm et le contenant soluble dans l'eau comprenant une composition polymère soluble dans l'eau ou étant constitué d'une composition polymère soluble dans l'eau, la composition polymère comprenant :
a) au moins un copolymère de poly(alcool vinylique) P1 présentant un degré d'hydrolyse dans la plage de 75 à 95% en mole,
le copolymère de poly(alcool vinylique) P1 étant un copolymère qui comprend
- des motifs récurrents d'alcool vinylique,
- des motifs récurrents d'ester de vinyle et
- des motifs récurrents d'au moins un comonomère,
ledit au moins un comonomère étant choisi parmi l'acrylate de pentaérythritol ainsi qu'éventuellement l'acide acrylique ;
ou
b) au moins un copolymère de poly(alcool vinylique) P1 présentant un degré d'hydrolyse dans la plage de 75 à 95% en mole,
le copolymère de poly(alcool vinylique) P1 étant un copolymère qui comprend
- des motifs récurrents d'alcool vinylique,
- des motifs récurrents d'ester de vinyle et
- des motifs récurrents d'au moins un comonomère, ledit au moins un comonomère étant choisi parmi l'acrylate de pentaérythritol ainsi qu'éventuellement l'acide acrylique ;
et
au moins un poly(alcool vinylique) P2 présentant un degré d'hydrolyse dans la plage de 87 à 95% en mole,
la composition polymère pouvant contenir, outre ledit au moins un copolymère de poly(alcool vinylique) P1 ou ledit au moins un copolymère de poly(alcool vinylique) P1 et ledit au moins un poly(alcool vinylique) P2, en plus éventuellement des additifs ;
la composition polymère présentant, dans le cas où elle comprend au moins un copolymère de poly(alcool vinylique) P1 et ne comprend pas de poly(alcool vinylique) P2, une teneur en motifs récurrents dudit au moins un comonomère dans une plage d'au total 10 à 20% en poids, par rapport au poids total du copolymère de poly(alcool vinylique) P1 ; et
la composition polymère présentant, dans le cas où elle comprend au moins un copolymère de poly(alcool vinylique) P1 et au moins un poly(alcool vinylique) P2, une teneur en motifs récurrents dudit au moins un comonomère dans une plage d'au total 10 à 20% en poids, par rapport au poids total du copolymère de poly(alcool vinylique) P1 et du poly(alcool vinylique) P2,
le degré d'hydrolyse du copolymère de poly(alcool vinylique) P1 et du poly(alcool vinylique) P2 étant déterminé par spectroscopie ¹H-RMN quantitative comme divulgué dans la description et
la composition du copolymère de poly(alcool vinylique) P1 et du poly(alcool vinylique) P2 étant déterminée par spectroscopie IR et PMN comme divulgué dans la description.

2. Contenant soluble dans l'eau selon la revendication 1, la composition polymère soluble dans l'eau comprenant au moins un copolymère de poly(alcool vinylique) P1 présentant un degré d'hydrolyse dans la plage de 80 à 90% en mole.

3. Contenant soluble dans l'eau selon la revendication 1 ou 2, la composition polymère soluble dans l'eau comprenant au moins un poly(alcool vinylique) P2 présentant un degré d'hydrolyse dans la plage de 91 à 94% en mole.

4. Contenant soluble dans l'eau selon l'une des revendications 1 à 3, la composition polymère soluble dans l'eau comprenant au moins un copolymère de poly(alcool vinylique) P1 choisi parmi le poly(alcool vinylique-co-ester de vinyle-co-acrylate de pentaérythritol), le poly(alcool vinylique-co-ester de vinyle-co-acrylate de pentaérythritol-co-acide acrylique) et leurs dérivés.

5. Contenant soluble dans l'eau selon l'une des revendications 1 à 4, la composition polymère soluble dans l'eau comprenant au moins un poly(alcool vinylique) P2, choisi parmi un poly(alcool vinylique-co-ester de vinyle).

6. Contenant soluble dans l'eau selon l'une des revendications 1 à 5, la composition polymère soluble dans l'eau étant constituée, à raison d'au moins 75% en poids, de préférence d'au moins 85% en poids, de manière particulièrement préférée d'au moins 90% en poids, par rapport au poids total de la composition polymère, dudit au moins un copolymère de poly(alcool vinylique) P1 et/ou dudit au moins un poly(alcool vinylique) P2.

7. Contenant soluble dans l'eau selon l'une des revendications 1 à 6, la composition polymère comprenant :
- au moins un poly(alcool vinylique) P2 ; et
- 1 à 7% en poids d'eau, par rapport au poids total du poly(alcool vinylique) P2.

8. Contenant soluble dans l'eau selon l'une des revendications 1 à 7, la composition polymère comprenant :
- au moins un copolymère de poly(alcool vinylique) P1 ; et
- 1 à 7% en poids d'eau, par rapport au poids total du copolymère de poly(alcool vinylique) P1.

9. Contenant soluble dans l'eau selon l'une des revendications 1 à 6, la composition polymère comprenant 1 à 7% en poids d'eau, par rapport au poids total de la composition polymère.

10. Contenant soluble dans l'eau selon l'une des revendications 1 à 9, ledit au moins un colorant ou ladite au moins une composition de colorant comprenant au moins un colorant azoïque soluble dans l'eau, choisi parmi le 6-hydroxy-5-[(E)-(2-méthoxy-5-méthyl-4-sulfonatophényl)diazényl]-2-naphtalènesulfonate disodique, le 4-hydroxy-3-[(E)-(4-sulfonato-1-naphtyl)diazényl]naphthalène-1-sulfonate disodique et leurs mélanges.

11. Composition Z1, comprenant au moins un composé de cyanure de métal alcalin solide, soluble dans l'eau et au moins un contenant soluble dans l'eau selon l'une des revendications 1 à 10.

12. Procédé de préparation d'une composition Z1 selon la revendication 11, le procédé comprenant au moins l'ajout dudit au moins un contenant soluble dans l'eau selon l'une des revendications 1 à 10 audit au moins un composé de cyanure de métal alcalin.

13. Procédé selon la revendication 12 pour la préparation d'une composition Z1 selon la revendication 11, le procédé comprenant au moins les étapes de procédé suivantes :
(i) mise à disposition d'une quantité déterminée au préalable dudit au moins un composé de cyanure de métal alcalin solide, soluble dans l'eau dans un récipient ;
(ii) ajout dudit au moins un contenant soluble dans l'eau selon l'une des revendications 1 à 10 audit au moins un composé de cyanure de métal alcalin dans le récipient ; la quantité dudit au moins un composé de cyanure de métal alcalin soluble dans l'eau dans le récipient et la quantité dudit au moins un colorant ou de ladite au moins une composition de colorant dans ledit au moins un contenant soluble dans l'eau étant dimensionnées de telle sorte qu'après la dissolution de la composition Z1 obtenue dans une quantité spécifiée d'un solvant aqueux, on obtient une solution de cyanure de métal alcalin aqueuse colorée d'une concentration spécifiée présentant un coefficient d'extinction déterminé au préalable.

14. Utilisation d'une composition Z1 selon la revendication 11 dans un procédé de préparation d'une composition aqueuse colorée Z2.

15. Procédé de préparation d'une composition aqueuse colorée Z2, qui comprend au moins un composé de cyanure de métal alcalin et au moins un colorant, le procédé comprenant l'introduction d'au moins un contenant soluble dans l'eau selon l'une des revendications 1 à 10 dans un solvant aqueux, ledit au moins un contenant soluble dans l'eau contenant au moins un colorant soluble dans l'eau ou au moins une composition de colorant soluble dans l'eau.

16. Procédé selon la revendication 15 pour la préparation d'une composition aqueuse colorée Z2, le procédé comprenant au moins les étapes de procédé suivantes :
(i) mise à disposition d'un contenant soluble dans l'eau selon l'une des revendications 1 à 10, le contenant soluble dans l'eau contenant un ingrédient ou une composition d'ingrédient présentant au moins un colorant soluble dans l'eau ou au moins une composition de colorant soluble dans l'eau ;
(ii) mise à disposition d'au moins un composé de cyanure de métal alcalin solide, soluble dans l'eau ;
(iii) introduction dudit au moins un contenant soluble dans l'eau et dudit au moins un composé de cyanure de métal alcalin solide soluble dans l'eau dans un solvant aqueux ;
(iv) le cas échéant mélange dudit au moins un contenant soluble dans l'eau et dudit au moins un composé de cyanure de métal alcalin soluble dans l'eau avec le solvant aqueux afin de soutenir la dissolution dudit au moins un contenant soluble dans l'eau et dudit au moins un composé de cyanure de métal alcalin soluble dans l'eau dans le solvant aqueux.

17. Procédé selon la revendication 15 ou 16 pour la préparation d'une composition aqueuse colorée Z2, ledit au moins un contenant soluble dans l'eau et ledit au moins un composé de cyanure de métal alcalin solide soluble dans l'eau étant utilisés sous forme d'une composition Z1 selon la revendication 11.
